(19) Europäisches Patentamt
European Patent Office
Office européen des brevets

(11) **EP 4 246 621 A1**

(12) **EUROPEAN PATENT APPLICATION**
published in accordance with Art. 153(4) EPC

(43) Date of publication:
**20.09.2023 Bulletin 2023/38**

(21) Application number: **21897612.4**

(22) Date of filing: **28.10.2021**

(51) International Patent Classification (IPC):
*H01M 4/14* (2006.01)   *H01M 4/62* (2006.01)
*H01M 4/74* (2006.01)   *H01M 10/06* (2006.01)

(52) Cooperative Patent Classification (CPC):
**H01M 4/14; H01M 4/62; H01M 4/74; H01M 10/06**

(86) International application number:
**PCT/JP2021/039833**

(87) International publication number:
**WO 2022/113636 (02.06.2022 Gazette 2022/22)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.11.2020   JP 2020197582**

(71) Applicant: **GS Yuasa International Ltd.
Kisshoin, Minami-ku,
Kyoto-shi, Kyoto 601-8520 (JP)**

(72) Inventor: **HIGASHIMURA, Yuki
Kyoto-shi, Kyoto 601-8520 (JP)**

(74) Representative: **Isarpatent
Patent- und Rechtsanwälte Barth
Charles Hassa Peckmann & Partner mbB
Friedrichstrasse 31
80801 München (DE)**

(54) **LEAD-ACID BATTERY**

(57)   A lead-acid battery includes a negative electrode plate, a positive electrode plate, and an electrolyte solution. The negative electrode plate includes a negative current collector and a negative electrode material. The negative electrode material contains a carbonaceous material, and the content of the carbonaceous material in the negative electrode material is 0.9% by mass or more. Arithmetic average roughness Ra of the surface of the negative current collector is 1 pm or more and 22 pm or less.

Fig. 1

**Description**

TECHNICAL FIELD

The present invention relates to a lead-acid battery.

BACKGROUND ART

Lead-acid batteries are in use for various applications, including automotive and industrial applications. The lead-acid batteries include a negative electrode plate, a positive electrode plate, a separator (or mat), an electrolyte solution, and the like. Each electrode plate includes a current collector and an electrode material.
In a lead-acid battery, in order to suppress accumulation of lead sulfate in a negative electrode, it has been attempted to add a conductive carbonaceous material such as carbon to a negative electrode material. For example, Patent Document 1 proposes that in a sealed lead-acid battery using a paste-type negative electrode plate, an active material of the paste-type negative electrode plate contains 0.4 to 4% by weight of carbon or graphite and 0.001 to 0.06% by weight of sodium silicate or potassium silicate.
Patent Document 2 proposes that in a sealed lead-acid battery in which 0.5% by weight or less of lignin with respect to a lead powder is added to the lead powder in an active material in a negative electrode plate, carbon is added in an amount of 0.1% by weight to 0.4% by weight with respect to the lead powder.
Patent Document 3 proposes a substrate for lead-acid battery in which the amount of calcium in an alloy of the substrate for lead-acid battery including a lead-calcium-based lead alloy is less than 0.05% by mass, and surface roughness (Rz) of the substrate is 15 pm or more.

PRIOR ART DOCUMENTS

PATENT DOCUMENTS

Patent Document 1: JP-A-2001-43849
Patent Document 2: JP-A-2002-42794
Patent Document 3: JP-A-2004-158433

SUMMARY OF THE INVENTION

PROBLEMS TO BE SOLVED BY THE INVENTION

In the case of using carbon black as the carbonaceous material, when the content of carbon black in the negative electrode material is increased, discharge end voltage remarkably decreases with repetition of a PSOC cycle, and the life may be reached.

MEANS FOR SOLVING THE PROBLEMS

One aspect of the present invention relates to a lead-acid battery including a negative electrode plate, a positive electrode plate, and an electrolyte solution, in which the negative electrode plate includes a negative current collector and a negative electrode material, and the negative electrode material contains a carbonaceous material, the content of the carbonaceous material in the negative electrode material is 0.9% by mass or more, and an arithmetic average roughness Ra of the surface of the negative current collector is 1 pm or more and 22 pm or less.

BRIEF DESCRIPTION OF THE DRAWINGS

Fig. 1 is a partially cutaway exploded perspective view showing an appearance and an internal structure of a lead-acid battery according to one aspect of the present invention.
Fig. 2 is a graph showing a relationship between surface roughness Ra of a negative current collector and the amount of falling off of a negative electrode material after the end of a PSOC cycle test.

## MODE FOR CARRYING OUT THE INVENTION

The carbonaceous material added to the negative electrode material has an action of enhancing charge acceptance and suppressing accumulation of lead sulfate. This makes it possible to improve life characteristics of the lead-acid battery particularly when use in a partial state of charge (PSOC) is repeated. However, when the content of the carbonaceous material in the negative electrode material increases (for example, 0.9% by mass or more), discharge end voltage remarkably decreases with repetition of a PSOC cycle, and the life may be reached. When the lead-acid battery after life is disassembled, falling off of the negative electrode material from the negative current collector is observed. From this, it is presumed that a carbon particle enters between lead particles as an active material and between the lead particle and the negative current collector, adhesion between the negative current collector and the active material is reduced, and the negative electrode material is peeled off from the negative current collector and reaches the life. In particular, when carbon black is used as the carbonaceous material, since carbon black has a small particle size, it is easy to form a conductive path between the carbon black and the lead particle, but it is easy to enter between the lead particle and the negative current collector, and the adhesion between the negative current collector and the active material is easily reduced.

In view of the above, a lead-acid battery according to one aspect of the present invention includes a negative electrode plate, a positive electrode plate, and an electrolyte solution. The negative electrode plate includes a negative current collector and a negative electrode material. The negative electrode material contains a carbonaceous material. The content of the carbonaceous material in the negative electrode material is 0.9% by mass or more. Arithmetic average roughness Ra of the surface of the negative current collector is 1 pm or more and 22 pm or less.

According to this lead-acid battery, even when the carbonaceous material is added to the negative electrode material at a high concentration of 0.9% by mass or more, by roughening the surface of the negative current collector to increase surface roughness, the adhesion between the negative current collector and the active material is improved, and the negative electrode material can be suppressed from peeling off from the negative current collector. Therefore, the end of the life due to the falling off of the negative electrode material can be suppressed, and the long life can be realized.

From the viewpoint of suppressing peeling of the negative electrode material and realizing a long life, the surface roughness of the negative current collector may be an arithmetic average roughness Ra of 1 pm or more, preferably 2 pm or more, and more preferably 4 pm or more. Meanwhile, from the viewpoint of suppressing corrosion of the negative current collector and suppressing falling off of the active material due to corrosion, the surface roughness of the negative current collector may be an arithmetic average roughness Ra of 22 pm or less, and more preferably 15 pm or less or 10 pm or less.

The arithmetic average roughness Ra of the surface of the negative current collector is preferably 1 pm or more and 15 pm or less (or 1 pm or more and 10 pm or less), more preferably 2 pm or more and 15 pm or less (or 2 pm or more and 10 pm or less), or 4 pm or more and 15 pm or less (or 4 pm or more and 10 pm or less).

The surface roughness of the negative current collector is determined by taking out the negative electrode plate from the lead-acid battery, and measuring the arithmetic average roughness Ra in a predetermined region of the surface of the negative current collector using a surface roughness meter with respect to the negative electrode plate from which the surface of the negative current collector is exposed by removing the negative electrode material as described later.

A density of the negative electrode material may be 3.4 g/cm$^3$ or more. In this case, by roughening the surface of the negative current collector, the adhesion between the negative current collector and the active material is remarkably improved, and falling off of the negative electrode material can be remarkably suppressed. Meanwhile, in the production of a lead-acid battery, the density of the negative electrode material is preferably 4.1 g/cm$^3$ or less, and more preferably 3.8 g/cm$^3$ or less, from the viewpoint of facilitating filling of the negative electrode paste into the negative current collector. That is, the density of the negative electrode material is preferably 3.4 g/cm$^3$ or more and 4.1 g/cm$^3$ or less, and more preferably 3.4 g/cm$^3$ or more and 3.8 g/cm$^3$ or less. Here, the density of the negative electrode material means bulk density, and is measured by a method described later.

The negative current collector may be a punched current collector. In the punched current collector, it is easy to control the surface roughness by providing irregularities in a mold at the time of punching.

The content of carbon black in the negative electrode material may be 1.5% by mass or more. The content of carbon black may be, for example, 5% by mass or less, 3% by mass or less, or 2.1% by mass or less.

The negative electrode material may contain a polymer compound having a peak in a range of 3.2 ppm or more and 3.8 ppm or less in a chemical shift of $^1$H-NMR spectrum measured using deuterated chloroform as a solvent.

A lead-acid battery according to another aspect of the present invention includes a negative electrode plate, a positive electrode plate, and an electrolyte solution. The negative electrode plate includes a negative current collector and a negative electrode material. The negative electrode material contains a carbonaceous material. The content of the carbonaceous material in the negative electrode material is 0.3% by mass or more. The negative electrode material contains the above polymer compound. In this case, the content of the carbonaceous material in the negative electrode material may be 0.9% by mass or more, or may be 1.5% by mass or more. The content of the carbonaceous material may be, for example, 5% by mass or less, 3% by mass or less, or 2.1% by mass or less. The carbonaceous material preferably contains carbon black.

Note that the peak appearing in the chemical shift range of 3.2 ppm or more and 3.8 ppm or less in the $^1$H-NMR spectrum is derived from an oxy $C_{2-4}$ alkylene unit.

The polymer compound has an action of increasing hydrogen overvoltage by covering the surface of lead in the negative electrode material. As a result, charge acceptance is improved, and a side reaction in which hydrogen is generated during overcharge or charge is less likely to occur. In addition, since the polymer compound easily has a linear structure by having a repeating structure of oxy $C_{2-4}$ alkylene units, the surface of lead can be thinly and widely covered with a small amount. As a result, an effect of reducing hydrogen generation reaction is obtained with a very small amount of the polymer compound, and an effect of reducing the amount of overcharge and gas generation amount is obtained.

In addition, when the negative electrode material contains a large amount of carbonaceous material (for example, carbon black), low-temperature high-rate discharge performance may be deteriorated. The polymer compound exhibits an effect of suppressing deterioration of low-temperature high-rate discharge performance due to containing of a carbonaceous material in the negative electrode material. As a result, in the lead-acid battery according to one aspect and another aspect of the present invention, high low-temperature high-rate discharge performance can be maintained even when the carbonaceous material is added in a high content of 0.9% by mass or more in the negative electrode material.

The effect of the polymer compound as described above is exhibited by covering the surface of lead with the polymer compound. Therefore, it is important that the polymer compound is allowed to be present near lead, and as a result, the effect of the polymer compound can be effectively exhibited. Thus, it is important that the negative electrode material contains the polymer compound regardless of whether or not a component of the lead-acid battery other than the negative electrode material contains the polymer compound.

The content of the polymer compound in the negative electrode material may be set to 600 ppm or less on a mass basis, in order to suppress a film of the polymer compound covering the surface of lead from becoming thick and the charge acceptance from being conversely reduced. The content of the polymer compound in the negative electrode material is preferably 30 ppm or more and 600 ppm or less on a mass basis. When the content of the polymer compound is in this range, an effect of improving the low-temperature high-rate discharge performance is remarkable.

The polymer compound may include an oxygen atom bonded to a terminal group and a $-CH_2-$ group and/or a $-CH<$ group bonded to the oxygen atom. In the $^1$H-NMR spectrum, a ratio of an integrated value of the peak of 3.2 ppm to 3.8 ppm to the sum of the integrated value of this peak, an integrated value of a peak of hydrogen atoms of the $-CH_2-$ group bonded to the oxygen atom, and an integrated value of a peak of a hydrogen atom of the $-CH<$ group bonded to the oxygen atom is preferably 85% or more. Such polymer compounds contain many oxy $C_{2-4}$ alkylene units in the molecule. Therefore, it is considered that the polymer compound becomes easy to adsorb to lead, and it becomes easy to thinly cover the lead surface by further easily taking a linear structure. Therefore, the effect of improving the low-temperature high-rate discharge performance can be enhanced.

In the $^1$H-NMR spectrum, the polymer compound having a peak in the chemical shift range of 3.2 ppm to 3.8 ppm preferably contains a repeating structure of oxy $C_{2-4}$ alkylene units. When the polymer compound containing a repeating structure of oxy $C_{2-4}$ alkylene units is used, it is considered that the polymer compound becomes easier to adsorb to lead, and it becomes easy to thinly cover the lead surface by easily taking a linear structure. Therefore, the effect of improving the low-temperature high-rate discharge performance can be further enhanced.

The polymer compound may contain at least one selected from the group consisting of a hydroxy compound having a repeating structure of oxy $C_{2-4}$ alkylene units, etherified products of the hydroxy compound, and esterified products of the hydroxy compound. Here, the hydroxy compound may be at least one selected from the group consisting of poly $C_{2-4}$ alkylene glycols, copolymers containing a repeating structure of oxy $C_{2-4}$ alkylene, and poly $C_{2-4}$ alkylene oxide adducts of a polyol.

The polymer compound may contain a repeating structure of oxypropylene units ($-O-CH(-CH_3)-CH_2-$). Such a polymer compound is suppressed from adhering thickly to the surface of lead while having high adsorptivity to lead, and is considered to have an excellent balance therebetween. Therefore, the amount of overcharge and the gas generation amount can be more effectively reduced, and the effect of improving the low-temperature high-rate discharge performance can be further enhanced.

The polymer compound may have one or more hydrophobic groups, and at least one of the hydrophobic groups may be a long-chain aliphatic hydrocarbon group having 8 or more carbon atoms. By the action of such a hydrophobic group, excessive coating of the lead surface with the polymer compound is suppressed, and it is easy to achieve both suppression of deterioration of charge acceptance and reduction in the amount of overcharge. The polymer compound preferably contains a repeating structure of oxyethylene units. When the polymer compound contains a repeating structure of oxyethylene units having high hydrophilicity, the polymer compound can be selectively adsorbed to lead. By the balance between the hydrophobic group and the hydrophilic group, the amount of overcharge can be more effectively reduced, and the effect of improving the low-temperature high-rate discharge performance can be further enhanced.

Examples of preferred polymer compounds include at least one selected from the group consisting of polyethylene glycol, polyethylene glycol oleate, polyethylene glycol dilaurate, polyethylene glycol distearate, and polypropylene glycol.

In the lead-acid battery, it is sufficient that the polymer compound can be contained in the negative electrode material, and the source of the polymer compound contained in the negative electrode material is not particularly limited. The polymer compound may be contained in any of the components (for example, a negative electrode plate, a positive electrode plate, an electrolyte solution, and a separator) of the lead-acid battery when preparing the lead-acid battery. The polymer compound may be contained in one component, or may be contained in two or more components (for example, a negative electrode plate and an electrolyte solution).

The lead-acid battery may be either a valve regulated (sealed) lead-acid battery (VRLA type lead-acid battery) or a flooded-type (vented) lead-acid battery.

In the present specification, the surface roughness of the positive current collector, the content of each of the polymer compound and the organic expander in the negative electrode material, and the density (bulk density) of the negative electrode material are determined for a negative electrode plate taken out from a fully discharged lead-acid battery.

(Description of terminology)

(Electrode material)

The negative electrode material and a positive electrode material are each usually held by the current collector. The electrode material is a portion excluding the current collector from the electrode plate. A member such as a mat or a pasting paper may be stuck to the electrode plate. Such a member (also referred to as a sticking member) is used integrally with the electrode plate and is thus assumed to be included in the electrode plate. When the electrode plate includes the sticking member (such as a mat or a pasting paper), the electrode material is a part obtained by removing the current collector and the sticking member from the electrode plate.

Among the positive electrode plates, a clad-type positive electrode plate includes a plurality of porous tubes, a spine inserted into each tube, a current collector coupling the plurality of spines, a positive electrode material with which a spine inserted tube is filled, and a joint that couples the plurality of tubes. In the clad-type positive electrode plate, the positive electrode material is a material obtained by removing the tube, the spine, the current collector, and the joint. In the clad-type positive electrode plate, the spine and the current collector may be collectively referred to as a positive current collector.

(Surface roughness)

Surface roughness Ra of the negative current collector is arithmetic average roughness Ra defined in JIS B 0601: 2001. The arithmetic average roughness Ra is measured using a surface roughness meter for a negative current collector whose surface is exposed by removing the negative electrode material from the negative electrode plate of the lead-acid battery in the following procedure. For example, the arithmetic average roughness Ra can be measured using "VK-X100 LASER MICROSCOPE" manufactured by KEYENCE CORPORATION.

First, the lead-acid battery is disassembled to take out the negative electrode plate. The negative electrode plate taken out is washed with water to remove a sulfuric acid component, and vacuum-dried (dried under a pressure lower than atmospheric pressure). Next, the negative electrode material is separated from the negative electrode plate, and the current collector is further washed with water and then vacuum-dried to obtain a negative current collector from which the negative electrode material has been removed.

The negative current collector is divided into three in each of the up-down direction and the left-right direction, and divided into a total of nine regions (it is not necessary to cut the negative electrode plate, in order to divide into the nine regions). For each of the nine regions, at least one measurement target point is arbitrarily selected, and the arithmetic average roughness Ra of the surface at the measurement target point is measured. The average value of the arithmetic average roughness Ra at nine or more points measured by the above method is defined as the surface roughness Ra of the negative current collector. The measurement target point may be a portion corresponding to a lateral rib or a portion corresponding to a longitudinal rib of the current collector. In the case of the punched current collector, the measurement target point is arbitrarily selected from a surface substantially parallel to a main surface of the negative electrode plate of the negative current collector.

(Bulk density of negative electrode material)

The bulk density of the negative electrode material is a density (g/cm$^3$) determined by dividing the mass of the negative electrode material by a bulk volume determined by a mercury intrusion method. The bulk density is determined for an unground negative electrode material taken out from a negative electrode plate taken from the lead-acid battery.

(Polymer compound)

The polymer compound satisfies at least one of the following conditions (i) and (ii).

Condition (i)

The polymer compound has a peak in a range of 3.2 ppm or more and 3.8 ppm or less in a chemical shift of $^1$H-NMR spectrum measured using deuterated chloroform as a solvent.

Condition (ii)

The polymer compound contains a repeating structure of oxy $C_{2-4}$ alkylene units.

In (i) above, the peak appearing in the range of 3.2 ppm or more and 3.8 ppm or less is derived from the oxy $C_{2-4}$ alkylene unit. That is, the polymer compound satisfying the condition (ii) is also the polymer compound satisfying the condition (i). The polymer compound satisfying the condition (i) may contain a repeating structure of monomer units other than the oxy $C_{2-4}$ alkylene unit, and may have a certain level of molecular weight. The number average molecular weight (Mn) of the polymer compound satisfying (i) or (ii) above may be, for example, 300 or more.

(Oxy $C_{2-4}$ alkylene unit)

The oxy $C_{2-4}$ alkylene unit is a unit represented by -O-R$^1$- (R$^1$ represents a $C_{2-4}$ alkylene group.).

(Organic expander)

The organic expander refers to an organic compound among compounds having a function of suppressing shrinkage of lead as a negative active material when charge-discharge of the lead-acid battery is repeated.

(Number average molecular weight)

The number average molecular weight (Mn) is determined by gel permeation chromatography (GPC). A standard substance used for determining Mn is polyethylene glycol.

(Fully charged state)

The fully charged state of the flooded-type lead-acid battery is defined by the definition of JIS D 5301: 2019. More specifically, the following state is defined as the fully charged state: the lead-acid battery is charged in a water bath at 25°C ± 2°C at a current (A) 0.2 times as large as a numerical value (numerical value whose unit is Ah) described as a rated capacity until a terminal voltage (V) during charge measured every fifteen minutes or an electrolyte solution density subjected to temperature correction to 20°C exhibits a constant value at three significant digits continuously three times. In the case of a valve regulated lead-acid battery, the fully charged state is a state where the lead-acid battery is subjected to constant current constant voltage charge of 2.23 V/cell at the current (A) 0.2 times as large as the numerical value (numerical value whose unit is Ah) described as the rated capacity in an air tank of 25°C ± 2°C, and the charge is completed when the charge current during constant voltage charge becomes a value (A) of 0.005 times as large as the numerical value (numerical value whose unit is Ah) described in the rated capacity.

The lead-acid battery in the fully charged state refers to a battery obtained by fully charging the formed lead-acid battery with electricity. The full charge of the lead-acid battery may be performed immediately after formation so long as being performed after formation or may be performed after the lapse of time from formation (e.g., a lead-acid battery in use (preferably at the initial stage of use) after formation may be fully charged). The battery at the initial stage of use refers to a battery that has not been used for a long time and has hardly deteriorated.

(Up-down direction of lead-acid battery or components of lead-acid battery)

In the present specification, the up-down direction of the lead-acid battery or components (such as electrode plate, container, and separator) of the lead-acid battery means the up-down direction of the lead-acid battery in the vertical direction when the lead-acid battery is in use. Each of the positive electrode plate and the negative electrode plate includes a lug for connecting to an external terminal. In a horizontal valve regulated lead-acid battery or the like, the lug part may be provided at a side portion of the electrode plate so as to protrude laterally; however, in many lead-acid batteries, the lug part is usually provided at an upper portion of the electrode plate so as to protrude upward.

Hereinafter, the lead-acid battery according to an embodiment of the present invention will be described for each of the main constituent elements, but the present invention is not limited to the following embodiment.

[Lead-acid battery]

(Negative electrode plate)

The negative electrode plate usually includes a negative current collector in addition to a negative electrode material.

(Negative current collector)

The negative current collector may be formed by casting lead (Pb) or a lead alloy, or may be formed by processing a lead sheet or a lead alloy sheet. Examples of the processing method include expanding processing and punching processing. It is preferable to use the grid-like current collector as the negative current collector because the negative electrode material is easy to be supported.

The lead alloy used for the negative current collector may be any of a Pb-Sb-based alloy, a Pb-Ca-based alloy, and a Pb-Ca-Sn-based alloy. The lead or lead alloys may further contain, as an additive element, at least one selected from the group consisting of Ba, Ag, Al, Bi, As, Se, Cu, and the like. The negative current collector may include a surface layer. The surface layer and the inner layer of the negative current collector may have different compositions. The surface layer may be formed in a part of the negative current collector. The surface layer may be formed in the lug part of the negative current collector. The surface layer of the lug part may contain Sn or a Sn alloy.

In order to enhance adhesion between the negative electrode material and the negative current collector and to suppress peeling of the negative electrode material from the negative current collector and falling off of the negative electrode material from the negative electrode plate, the surface of the negative current collector is roughened so as to have an arithmetic average roughness Ra of 1 pm or more. In the case of an expanded grid or a punched current collector, for example, roughening can be performed by pressing an electrode plate having fine irregular portions against a surface of a lead or lead alloy sheet before processing or a surface of a current collector after processing, or by blasting the surface of the current collector. In this case, the roughening may be performed on the sheet-like current collector before processing, or may be performed during or after the current collector processing. In the case of a cast current collector, roughening can be efficiently performed by providing fine irregularities on the surface of a mold used in casting.

(Negative electrode material)

The negative electrode material contains carbon black. The negative electrode material further contains a negative active material (specifically, lead or lead sulfate) that exhibits a capacity through a redox reaction. The negative electrode material may further contain an organic expander. The negative electrode material may contain at least one selected from the group consisting of other carbonaceous materials other than carbon black and other additives. Examples of the additive include barium sulfate, fibers (resin fibers and the like), and the like, but are not limited thereto. Note that the negative active material in the charged state is spongy lead, but the non-formed negative electrode plate is usually prepared using lead powder.

(Polymer compound)

The polymer compound has a peak in a range of 3.2 ppm or more and 3.8 ppm or less in a chemical shift of $^1$H-NMR spectrum. Such polymer compounds have oxy $C_{2-4}$ alkylene units. Examples of the oxy $C_{2-4}$ alkylene unit include an oxyethylene unit, an oxypropylene unit, an oxytrimethylene unit, an oxy 2-methyl-1,3-propylene unit, an oxy 1,4-butylene unit, an oxy 1,3-butylene unit, and the like. The polymer compound may have one kind or two or more kinds of such oxy $C_{2-4}$ alkylene units.

The polymer compound preferably contains a repeating structure of oxy $C_{2-4}$ alkylene units. The repeating structure may contain one kind of oxy $C_{2-4}$ alkylene unit, or may contain two or more kinds of oxy $C_{2-4}$ alkylene units. The polymer compound may contain one kind of the repeating structure or two or more kinds of the repeating structures.

The polymer compound having a repeating structure of oxy $C_{2-4}$ alkylene units also includes those classified as a surfactant (more specifically, a nonionic surfactant).

Examples of the polymer compound include hydroxy compounds having a repeating structure of oxy $C_{2-4}$ alkylene units (poly $C_{2-4}$ alkylene glycols, copolymers containing a repeating structure of oxy $C_{2-4}$ alkylene, poly $C_{2-4}$ alkylene oxide adducts of polyols, and the like), etherified product or esterified product of these hydroxy compounds, and the like.

Examples of the copolymer include copolymers containing different oxy $C_{2-4}$ alkylene units. The copolymer may be a block copolymer.

The polyol may be any of an aliphatic polyol, an alicyclic polyol, an aromatic polyol, a heterocyclic polyol, and the like. From the viewpoint that the polymer compound easily spreads thinly on the lead surface, aliphatic polyols, alicyclic polyols (for example, polyhydroxycyclohexane, polyhydroxynorbornane, and the like), and the like are preferable, and among them, aliphatic polyols are preferable. Examples of the aliphatic polyol include aliphatic diols and polyols of triol or higher (for example, glycerin, trimethylolpropane, pentaerythritol, sugar, sugar alcohol, and the like), and the like. Examples of the aliphatic diol include an alkylene glycol having 5 or more carbon atoms. The alkylene glycol may be, for example, a $C_{5-14}$ alkylene glycol or a $C_{5-10}$ alkylene glycol. Examples of the sugar alcohol include erythritol, xylitol, mannitol, sorbitol, and the like. The sugar or sugar alcohol may have either a chain structure or a cyclic structure. In the polyalkylene oxide adduct of the polyol, the alkylene oxide corresponds to an oxy $C_{2-4}$ alkylene unit of the polymer compound and contains at least $C_{2-4}$ alkylene oxide. From the viewpoint that the polymer compound easily take a linear structure, the polyol is preferably a diol.

The etherified product has an $-OR^2$ group obtained by etherifying - OH groups (-OH groups composed of a hydrogen atom of a terminal group and an oxygen atom bonded to the hydrogen atom) at at least a part of terminals of the hydroxy compound having the repeating structure of oxy $C_{2-4}$ alkylene units (wherein $R^2$ is an organic group.). Among terminals of the polymer compound, some terminals may be etherified, or all terminals may be etherified. For example, one terminal of a main chain of the linear polymer compound may be an -OH group, and the other terminal may be an $-OR^2$ group.

The esterified product has an $-O-C(=O)-R^3$ group obtained by esterifying -OH groups (-OH groups composed of a hydrogen atom of a terminal group and an oxygen atom bonded to the hydrogen atom) at at least a part of terminals of the hydroxy compound having the repeating structure of oxy $C_{2-4}$ alkylene units (wherein $R^3$ is an organic group.). Among terminals of the polymer compound, some terminals may be esterified, or all terminals may be esterified. For example, one terminal of a main chain of the linear polymer compound may be an -OH group, and the other terminal may be an $-O-C(=O)-R^3$ group.

Examples of each of the organic groups $R^2$ and $R^3$ include a hydrocarbon group. The hydrocarbon group may have a substituent (for example, a hydroxy group, an alkoxy group, and/or a carboxy group, and the like). The hydrocarbon group may be any of aliphatic, alicyclic, and aromatic. The aromatic hydrocarbon group and the alicyclic hydrocarbon group may have an aliphatic hydrocarbon group (for example, an alkyl group, an alkenyl group, an alkynyl group, or the like) as a substituent. The number of carbon atoms of the aliphatic hydrocarbon group as a substituent may be, for example, 1 to 30, 1 to 20, 1 to 10, 1 to 6, or 1 to 4.

Examples of the aromatic hydrocarbon group include aromatic hydrocarbon groups having 24 or less carbon atoms (for example, 6 to 24). The number of carbon atoms of the aromatic hydrocarbon group may be 20 or less (for example, 6 to 20), 14 or less (for example, 6 to 14), or 12 or less (for example, 6 to 12). Examples of the aromatic hydrocarbon group include an aryl group, a bisaryl group, and the like. Examples of the aryl group include a phenyl group, a naphthyl group, and the like. Examples of the bisaryl group include monovalent groups corresponding to bisarene. Examples of the bisarene include biphenyl and bisarylalkanes (for example, bis $C_{6-10}$ aryl $C_{1-4}$ alkanes (such as 2,2-bisphenylpropane), and the like).

Examples of the alicyclic hydrocarbon group include alicyclic hydrocarbon groups having 16 or less carbon atoms. The alicyclic hydrocarbon group may be a bridged cyclic hydrocarbon group. The number of carbon atoms of the alicyclic hydrocarbon group may be 10 or less or 8 or less. The number of carbon atoms of the alicyclic hydrocarbon group is, for example, 5 or more, and may be 6 or more.

The number of carbon atoms of the alicyclic hydrocarbon group may be 5 (or 6) or more and 16 or less, 5 (or 6) or more and 10 or less, or 5 (or 6) or more and 8 or less.

Examples of the alicyclic hydrocarbon group include cycloalkyl groups (cyclopentyl group, cyclohexyl group, cyclooctyl group, and the like), cycloalkenyl groups (cyclohexenyl group, cyclooctenyl group, and the like), and the like. The alicyclic hydrocarbon group also includes hydrogenated products of the aromatic hydrocarbon groups.

Among the hydrocarbon groups, an aliphatic hydrocarbon group is preferable from the viewpoint that the polymer compound easily adheres thinly to the lead surface. The aliphatic hydrocarbon group may be saturated or unsaturated. Examples of the aliphatic hydrocarbon group include an alkyl group, an alkenyl group, an alkynyl group, a dienyl group having two carbon-carbon double bonds, trienyl group having three carbon-carbon double bonds, and the like. The aliphatic hydrocarbon group may be either linear or branched.

The number of carbon atoms of the aliphatic hydrocarbon group is, for example, 30 or less, and may be 26 or less or 22 or less, 20 or less or 16 or less, 14 or less or 10 or less, or 8 or less or 6 or less. The lower limit of the number of carbon atoms is 1 or more for an alkyl group, 2 or more for an alkenyl group and an alkynyl group, 3 or more for a dienyl group, and 4 or more for a trienyl group, depending on the type of the aliphatic hydrocarbon group. Among them, an alkyl group and an alkenyl group are preferable from the viewpoint that the polymer compound easily adheres thinly to the lead surface.

Specific examples of the alkyl group include methyl, ethyl, n-propyl, i-propyl, n-butyl, i-butyl, s-butyl, t-butyl, n-pentyl, neopentyl, i-pentyl, s-pentyl, 3-pentyl, t-pentyl, n-hexyl, 2-ethylhexyl, n-octyl, n-nonyl, n-decyl, i-decyl, undecyl, lauryl (dodecyl), tridecyl, myristyl, pentadecyl, cetyl, heptadecyl, stearyl, icosyl, henicosyl, behenyl, and the like.

Specific examples of the alkenyl group include vinyl, 1-propenyl, allyl, cis-9-heptadecen-1-yl, palmitoleyl, oleyl, and the like. An alkenyl group may be, for example, a $C_{2-30}$ alkenyl group or a $C_{2-26}$ alkenyl group, a $C_{2-22}$ alkenyl group or a $C_{2-20}$ alkenyl group, or a $C_{10-20}$ alkenyl group.

When at least one selected from the group consisting of an etherified product of the hydroxy compound having a repeating structure of oxy $C_{2-4}$ alkylene units and an esterified products of the hydroxy compound having a repeating structure of oxy $C_{2-4}$ alkylene units is used among the polymer compounds, it is preferable because the amount of overcharge is suppressed and the effect of suppressing the deterioration of the charge acceptance can be further enhanced. Also, among the polymer compounds as described above, polymer compounds having a repeating structure of oxypropylene units, polymer compounds having a repeating structure of oxyethylene units, or the like are preferable.

The polymer compound may have one or more hydrophobic groups. Examples of the hydrophobic group include an aromatic hydrocarbon group, an alicyclic hydrocarbon group, and a long-chain aliphatic hydrocarbon group among the above-mentioned hydrocarbon groups. Examples of the long-chain aliphatic hydrocarbon group include those having 8 or more carbon atoms among the above-mentioned aliphatic hydrocarbon groups (such as alkyl groups and alkenyl groups), those having 12 or more carbon atoms is preferable, and those having 16 or more carbon atoms is more preferable. Among them, the polymer compound having a long-chain aliphatic hydrocarbon group is preferable because it hardly causes excessive adsorption to lead and the effect of suppressing the deterioration of the charge acceptance is further enhanced. In the polymer compound, at least one of the hydrophobic groups may be a long-chain aliphatic hydrocarbon group. The number of carbon atoms of the long-chain aliphatic hydrocarbon group may be 30 or less, 26 or less, or 22 or less.

The number of carbon atoms of the long-chain aliphatic hydrocarbon group may be 8 or more (or 12 or more) and 30 or less, 8 or more (or 12 or more) and 26 or less, 8 or more (or 12 or more) and 22 or less, 10 or more and 30 or less (or 26 or less), or 10 or more and 22 or less.

Among the polymer compounds, those having a hydrophilic group and a hydrophobic group correspond to a nonionic surfactant. The repeating structure of oxyethylene units exhibits high hydrophilicity and can be a hydrophilic group in the nonionic surfactant. Thus, the polymer compound having a hydrophobic group preferably contains a repeating structure of oxyethylene units. The polymer compound as described above can suppress excessive coverage of the surface of lead while being selectively adsorbed to lead due to a balance between hydrophobicity and high hydrophilicity due to the repeating structure of oxyethylene units, and thus, it is possible to further enhance the effect of suppressing the deterioration of the charge acceptance while reducing the amount of overcharge. The polymer compound as described above can ensure high adsorptivity to lead even with a relatively low molecular weight (for example, Mn is 1,000 or less.).

Among the polymer compounds, a polyoxypropylene-polyoxyethylene block copolymer, an etherified product of a hydroxy compound having a repeating structure of oxyethylene units, an esterified product of a hydroxy compound having a repeating structure of oxyethylene units, and the like correspond to a nonionic surfactant.

In a polyoxypropylene-polyoxyethylene block copolymer or the like, the repeating structure of oxyethylene units corresponds to a hydrophilic group, and the repeating structure of oxypropylene units corresponds to a hydrophobic group. Such a copolymer is also included in the polymer compound having a hydrophobic group.

Examples of the polymer compound having a hydrophobic group and containing a repeating structure of oxyethylene units include etherified products (such as alkyl ethers) of polyethylene glycol, esterified products (such as carboxylic acid esters) of polyethylene glycol, etherified products (such as alkyl ethers) of the polyethylene oxide adduct of the polyol, esterified products of the polyethylene oxide adduct (such as carboxylic acid esters) of the polyol (such as polyol of triol or higher), and the like. Specific examples of the polymer compound as described above include polyethylene glycol oleate, polyethylene glycol dioleate, polyethylene glycol dilaurate, polyethylene glycol distearate, polyoxyethylene coconut oil fatty acid sorbitan, polyoxyethylene sorbitan oleate, polyoxyethylene sorbitan stearate, polyoxyethylene lauryl ether, polyoxyethylene tetradecyl ether, and polyoxyethylene cetyl ether, but the polymer compound is not limited thereto. Among them, when an esterified product of polyethylene glycol, an esterified product of a polyethylene oxide adduct of the polyol, and the like are used, higher charge acceptance can be secured and the amount of overcharge can be remarkably reduced. In addition, the low-temperature high-rate discharge performance can be remarkably improved, which is preferable.

Among the polymer compounds, for one classified as a surfactant, HLB of the polymer compound is preferably 4 or more, and more preferably 4.3 or more from the viewpoint of further easily reducing the reduction amount of the electrolyte solution. From the viewpoint of easily securing higher charge acceptance, HLB of the polymer compound is preferably 18 or less, more preferably 10 or less or 9 or less, and still more preferably 8.5 or less.

The HLB of the polymer compound may be 4 or more (or 4.3 or more) and 18 or less, or 4 or more (or 4.3 or more) and 10 or less. From the viewpoint of achieving an excellent balance between reduction of the amount of overcharge and improvement of charge acceptance, the HLB of the polymer compound is preferably 4 or more (or 4.3 or more) and 9 or less, or 4 or more (or 4.3 or more) and 8.5 or less.

From the viewpoint of further enhancing the effect of reducing the amount of overcharge and easily securing higher charge acceptance, the case where the repeating structure of oxy $C_{2-4}$ alkylene includes at least a repeating structure of oxypropylene units is also preferable. In this case, although the charge acceptance tends to be lower than that in the case of the repeating structure of oxyethylene units, even in this case, high charge acceptance can be secured while the gas generation amount is kept low. The polymer compound containing the oxypropylene unit has peaks derived from -CH< and $-CH_2-$ of the oxypropylene unit in a range of 3.2 ppm to 3.8 ppm in a chemical shift of $^1$H-NMR spectrum. Since electron densities around a nucleus of a hydrogen atom in these groups are different, the peak is split. Such a polymer compound has peaks, for example, in a range of 3.2 ppm or more and 3.42 ppm or less and a range of more than 3.42 ppm and 3.8 ppm or less in a chemical shift of $^1$H-NMR spectrum. The peak in the range of 3.2 ppm or more and 3.42 ppm or less is derived from $-CH_2-$, and the peak in the range of more than 3.42 ppm and 3.8 ppm or less is derived from -CH< and $-CH_2-$.

Examples of the polymer compound containing at least a repeating structure of oxypropylene units include polypropylene glycol, a copolymer containing a repeating structure of oxypropylene units, a polypropylene oxide adduct of the polyol, etherified or esterified products thereof, and the like. Examples of the copolymer include an oxypropylene-oxyalkylene copolymer (provided that oxyalkylene is $C_{2-4}$ alkylene other than oxypropylene) and the like. Examples of the oxypropylene-oxyalkylene copolymer include an oxypropylene-oxyethylene copolymer, an oxypropylene-oxytrimethylene copolymer, and the like. The oxypropylene-oxyalkylene copolymer may be referred to as a polyoxypropylene-polyoxyalkylene copolymer (for example, a polyoxypropylene-polyoxyethylene copolymer). The oxypropylene-oxyalkylene copolymer may be a block copolymer (for example, a polyoxypropylene-polyoxyethylene block copolymer). Examples of the etherified product include polypropylene glycol alkyl ether, alkyl ether of an oxypropylene-oxyalkylene copolymer (such as alkyl ether of polyoxypropylene-polyoxyethylene copolymer), and the like. Examples of the esterified product include polypropylene glycol ester of carboxylic acid, carboxylic acid ester of an oxypropylene-oxyalkylene copolymer (such as carboxylic acid ester of polyoxypropylene-polyoxyethylene copolymer), and the like.

Examples of the polymer compound containing at least a repeating structure of oxypropylene units include polypropylene glycol, a polyoxypropylene-polyoxyethylene copolymer (such as a polyoxypropylene-polyoxyethylene block copolymer), a polyoxyethylene-polyoxypropylene alkyl ether (such as alkyl ether (such as butyl ether) in which the R2 is an alkyl having 10 or less carbon atoms (or 8 or less or 6 or less carbon atoms)), a polypropylene glycol carboxylate (such as polypropylene glycol carboxylate (such as polypropylene glycol acetate) in which the $R^3$ is an alkyl having 10 or less carbon atoms (or 8 or less or 6 or less carbon atoms)), and a polypropylene oxide adduct of polyol of triol or higher (such as polypropylene oxide adduct of glycerin), but the polymer compound is not limited thereto.

In the polymer compound containing a repeating structure of the oxypropylene unit, the proportion of the oxypropylene unit is, for example, 5 mol% or more, and may be 10 mol% or more or 20 mol% or more. The proportion of the oxypropylene unit is, for example, 100 mol% or less. In the copolymer, the proportion of the oxypropylene unit may be 90 mol% or less, 75 mol% or less, or 60 mol% or less.

In the polymer compound containing a repeating structure of oxypropylene units, the proportion of the oxypropylene unit may be 5 mol% or more and 100 mol% or less (or 90 mol% or less), 10 mol% or more and 100 mol% or less (or 90 mol% or less), 20 mol% or more and 100 mol% or less (or 90 mol% or less), 5 mol% or more and 75 mol% or less (or 60 mol% or less), 10 mol% or more and 75 mol% or less (or 60 mol% or less), or 20 mol% or more and 75 mol% or less (or 60 mol% or less).

It is preferable that the polymer compound contains a large amount of oxy $C_{2-4}$ alkylene units from the viewpoint of enhancing adsorptivity of the polymer compound to lead and easily taking a linear structure of the polymer compound. Such a polymer compound includes, for example, an oxygen atom bonded to a terminal group and a $-CH_2-$ group and/or a -CH< group bonded to the oxygen atom. In the $^1$H-NMR spectrum of the polymer compound, the ratio of the integrated value of the peak of 3.2 ppm to 3.8 ppm to the sum of the integrated value of this peak, the integrated value of the peak of the hydrogen atoms of the $-CH_2-$ group, and the integrated value of the peak of the hydrogen atom of the -CH< group increases. This ratio is, for example, 50% or more, and may be 80% or more. From the viewpoint of further enhancing the effect of reducing the amount of overcharge and easily securing higher charge acceptance, the above ratio is preferably 85% or more, and more preferably 90% or more. For example, when the polymer compound has an -OH group at a terminal and also has a $-CH_2-$group or a -CH< group bonded to an oxygen atom of the -OH group, in the $^1$H-

NMR spectrum, the peaks of the hydrogen atoms of the -CH$_2$- group and the -CH< group have a chemical shift in a range of more than 3.8 ppm and 4.0 ppm or less.

The negative electrode material may contain one kind or two or more kinds of polymer compounds.

The polymer compound may contain, for example, a compound having Mn of 5 million or less, 3 million or less, or 2 million or less, 500,000 or less or 100,000 or less, or 50,000 or less or 20,000 or less. From the viewpoint of reducing the thickness of the film of the polymer compound covering the surfaces of lead and lead sulfate to secure higher charge acceptance, the polymer compound preferably contains a compound having Mn of 10,000 or less, and may contain 5,000 or less or 4,000 or less, or may contain 3,000 or less or 2,500 or less. The Mn of such a compound may be 300 or more, 400 or more, or 500 or more from the viewpoint of easily covering the surface of lead with the polymer compound and reducing the gas generation amount. From the viewpoint of further enhancing the effect of reducing the gas generation amount, the Mn of such a compound is preferably 1,000 or more, and more preferably 1,500 or more, or 1,800 or more. As the polymer compound, two or more compounds having different Mn may be used. That is, the polymer compound may have a plurality of peaks of Mn in the distribution of the molecular weight.

The content of the polymer compound in the negative electrode material is, for example, 8 ppm or more and may be 10 ppm or more on a mass basis. From the viewpoint of reducing the amount of overcharge and improving the high-rate discharge characteristics, the content of the polymer compound in the negative electrode material is preferably 20 ppm or more, more preferably 30 ppm or more on a mass basis. From the viewpoint of maintaining high charge acceptance, the content of the polymer compound in the negative electrode material may be 600 ppm or less, and is preferably 500 ppm or less or 400 ppm or less on a mass basis.

The content (mass basis) of the polymer compound in the negative electrode material may be 8 ppm or more (or 10 ppm or more) and 600 ppm or less, 8 ppm or more (or 10 ppm or more) and 500 ppm or less, 8 ppm or more (or 10 ppm or more) and 400 ppm or less, 20 ppm or more (or 30 ppm or more) and 600 ppm or less, 20 ppm or more (or 30 ppm or more) and 500 ppm or less, or 20 ppm or more (or 30 ppm or more) and 400 ppm or less.

(Organic expander)

The organic expanders are generally roughly classified into lignin compounds and synthetic organic expanders. It can also be said that the synthetic organic expander is an organic expander other than lignin compounds. Examples of the organic expander contained in the negative electrode material include a lignin compound, a synthetic organic expander, and the like. The negative electrode material may contain one kind or two or more kinds of organic expanders.

Examples of the lignin compounds include lignin, lignin derivatives, and the like. Examples of the lignin derivative include lignin sulfonic acid or salts thereof (such as alkali metal salts (sodium salts and the like)), and the like.

The synthetic organic expander is an organic polymer containing sulfur element, and generally contains a plurality of aromatic rings in the molecule and sulfur element as a sulfur-containing group. Among the sulfur-containing groups, a sulfonic acid group or a sulfonyl group which is in a stable form is preferable. The sulfonic acid group may exist in an acid form, or may exist in a salt form like a Na salt.

As the organic expander, the case of using a condensate containing at least a unit of an aromatic compound is also preferable. Examples of such a condensate include a condensate of an aromatic compound with an aldehyde compound (such as at least one selected from the group consisting of aldehydes (for example, formaldehyde) and condensates thereof). The organic expander may contain a unit of one kind of an aromatic compound or a unit of two or more kinds of aromatic compounds.

Note that the unit of an aromatic compound refers to a unit derived from an aromatic compound incorporated in a condensate.

Examples of the aromatic ring of the aromatic compound include a benzene ring, a naphthalene ring, and the like. When the aromatic compound has a plurality of aromatic rings, the plurality of aromatic rings may be linked by a direct bond, a linking group (for example, an alkylene group (including an alkylidene group), a sulfone group), or the like. Examples of such a structure include bisarene structures (biphenyl, bisphenylalkane, bisphenylsulfone, and the like). Examples of the aromatic compound include compounds having the aromatic ring and at least one selected from the group consisting of a hydroxy group and an amino group. The hydroxy group or the amino group may be directly bonded to the aromatic ring, or may be bonded as an alkyl chain having a hydroxy group or an amino group. Note that the hydroxy group also includes salts of hydroxy group (-OMe). The amino group also includes salts of an amino group (specifically, salts with anions). Examples of Me include alkali metals (Li, K, Na, and the like), Group 2 metals of the periodic table (Ca, Mg, and the like), and the like.

As the aromatic compound, bisarene compounds [bisphenol compounds, hydroxybiphenyl compounds, bisarene compounds having an amino group (bisarylalkane compounds having an amino group, bisarylsulfone compounds having an amino group, biphenyl compounds having an amino group, and the like), hydroxyarene compounds (hydroxynaphthalene compounds, phenol compounds, and the like), aminoarene compounds (aminonaphthalene compounds, aniline compounds (aminobenzenesulfonic acid, alkylaminobenzenesulfonic acid, and the like), and the like), and the like] are preferable. The aromatic compound may further have a substituent. The organic expander may contain one or more or a plurality of residues of these compounds. As the bisphenol compound, bisphenol A, bisphenol S, bisphenol F, and the like are preferable.

The condensate preferably contains a unit of an aromatic compound having at least a sulfur-containing group. Among them, when a condensate containing at least a unit of a bisphenol compound having a sulfur-containing group is used, it is advantageous in securing higher charge acceptance. From the viewpoint of enhancing the effect of reducing the amount of overcharge, it is also preferable to use a condensate of a naphthalene compound having a sulfur-containing group and having at least one selected from the group consisting of a hydroxy group and an amino group with an aldehyde compound.

The sulfur-containing group may be directly bonded to the aromatic ring contained in the compound, and for example, may be bonded to the aromatic ring as an alkyl chain having a sulfur-containing group. The sulfur-containing group is not particularly limited, and examples thereof include a sulfonyl group, a sulfonic acid group or a salt thereof, and the like.

In addition, as the organic expander, for example, at least a condensate containing at least one selected from the group consisting of units of the bisarene compound and units of a monocyclic aromatic compound (hydroxyarene compound and/or aminoarene compound, or the like) may be used. The organic expander may contain at least a condensate containing a unit of a bisarene compound and a unit of a monocyclic aromatic compound (among them, hydroxyarene compound). Examples of such a condensate include a condensate of a bisarene compound and a monocyclic aromatic compound with an aldehyde compound. As the hydroxyarene compound, a phenol sulfonic acid compound (phenol sulfonic acid, a substituted product thereof, or the like) is preferable. As the aminoarene compound, aminobenzenesulfonic acid, alkylaminobenzenesulfonic acid, and the like are preferable. As the monocyclic aromatic compound, a hydroxyarene compound is preferable.

The content of the organic expander contained in the negative electrode material is, for example, 0.005% by mass or more and may be 0.01% by mass or more. When the content of the organic expander is in such a range, a high low-temperature high-rate discharge capacity can be secured. The content of the organic expander is, for example, 1.0 mass% or less and may be 0.5 mass% or less. From the viewpoint of further enhancing the effect of suppressing the deterioration of the charge acceptance, the content of the organic expander is preferably 0.3% by mass or less, more preferably 0.25% by mass or less, still more preferably 0.2% by mass or less or 0.15% by mass or less, and may be 0.12% by mass or less.

The content of the organic expander contained in the negative electrode material may be 0.005% by mass or more (or 0.01% by mass or more) and 1.0% by mass or less, 0.005% by mass or more (or 0.01% by mass or more) and 0.5% by mass or less, 0.005% by mass or more (or 0.01% by mass or more) and 0.3% by mass or less, 0.005% by mass or more (or 0.01% by mass or more) and 0.25% by mass or less, 0.005% by mass or more (or 0.01% by mass or more) and 0.2% by mass or less, 0.005% by mass or more (or 0.01% by mass or more) and 0.15% by mass or less, or 0.005% by mass or more (or 0.01% by mass or more) and 0.12% by mass or less.

(Carbonaceous material)

The negative electrode material contains a carbonaceous material. As the carbonaceous material, carbon black is preferably used. Examples of the carbon black include acetylene black, furnace black, and lamp black. Furnace black also includes ketjen black (product name).

Other carbonaceous materials other than carbon black may be contained in the negative electrode material. As the other carbonaceous materials, graphite, hard carbon, soft carbon, and the like can be used. The graphite may be a carbonaceous material including a graphite-type crystal structure and may be either artificial graphite or natural graphite. The negative electrode material may contain one kind or two or more kinds of carbonaceous materials.

The content of the carbonaceous material (including carbon black) in the negative electrode material is 0.3% by mass or more or 0.9% by mass or more, and may be 1.5% by mass or more. The content of the carbonaceous material is, for example, 5% by mass or less, and may be 3% by mass or less, or 2.1% by mass or less.

The content of the carbonaceous material in the negative electrode material may be 0.9% by mass or more and 5% by mass or less, 0.9% by mass or more and 3% by mass or less, 0.9% by mass or more and 2.1% by mass or less, or 1.5% by mass or more and 2.1% by mass or less (or 0.9% by mass or more and 3% by mass or less).

(Barium sulfate)

The content of barium sulfate in the negative electrode material is, for example, 0.05% by mass or more and may be 0.10% by mass or more. The content of barium sulfate in the negative electrode material is, for example, 3% by mass or less and may be 2% by mass or less.

The content of barium sulfate in the negative electrode material may be 0.05% by mass or more and 3% by mass or less, 0.05% by mass or more and 2% by mass or less, 0.10% by mass or more and 3% by mass or less, or 0.10% by mass or more and 2% by mass or less.

(Measurement of bulk density of negative electrode material and analysis of negative electrode material or components)

A method for measuring the bulk density of the negative electrode material and a method for analyzing the negative electrode material or constituent components thereof will be described below. Prior to measurement or analysis, the lead-acid battery in the fully charged state is disassembled to obtain a negative electrode plate to be analyzed. The obtained negative electrode plate is washed with water to remove sulfuric acid from the negative electrode plate. The washing with water is performed until it is confirmed that color of a pH test paper does not change by pressing the pH test paper against the surface of the negative electrode plate washed with water. However, the washing with water is performed within two hours. The negative electrode plate washed with water is dried at 60 $\pm$ 5°C in a reduced pressure environment for about six hours. After drying, when the sticking member is included in the negative electrode plate, the sticking member is removed by peeling. Next, the negative electrode material is separated from the negative electrode plate to obtain a sample (hereinafter referred to as sample A). The sample A is ground as necessary and subjected to analysis.

(1) Measurement of bulk density of negative electrode material

The bulk density of unground sample A is determined by a mercury intrusion method using a mercury porosimeter. More specifically, first, a predetermined amount of unground sample A is taken, and the mass thereof is measured. The sample A is charged into a measurement container of a mercury porosimeter, evacuated under reduced pressure, and then filled with mercury at a pressure of 0.5 psia or more and 0.55 psia or less ($\approx$ 3.45 kPa or more and 3.79 kPa or less) to measure a bulk volume of sample A and the measured mass of sample A is divided by the bulk volume to determine the bulk density of the negative electrode material. A volume obtained by subtracting a mercury injection volume from a volume of the measurement container is defined as the bulk volume. As the mercury porosimeter, an automatic porosimeter (AutoPore IV 9505) manufactured by Shimadzu Corporation is used.

(2) Analysis of polymer compound

(2-1) Qualitative analysis of polymer compound

(a) Analysis of oxy $C_{2-4}$ alkylene unit

The pulverized sample A is used. 150.0 $\pm$ 0.1 mL of chloroform is added to 100.0 $\pm$ 0.1 g of the sample A, and the mixture is stirred at 20 $\pm$ 5°C for 16 hours to extract the polymer compound. Thereafter, the solid content is removed by filtration. For a chloroform solution in which the polymer compound obtained by the extraction is dissolved or the polymer compound obtained by drying the chloroform solution, information is obtained from, for example, at least one selected from an infrared spectroscopic spectrum, an ultraviolet-visible absorption spectrum, an NMR spectrum, and LC-MS and pyrolysis GC-MS to specify the polymer compound.

Chloroform is distilled off under reduced pressure from the chloroform solution in which the polymer compound obtained by the extraction is dissolved to recover a chloroform soluble component. The chloroform soluble component is dissolved in deuterated chloroform, and a $^1$H-NMR spectrum is measured under the following conditions. From this $^1$H-NMR spectrum, a peak with a chemical shift in the range of 3.2 ppm or more and 3.8 ppm or less is confirmed. Also, from the peak in this range, the type of the oxy $C_{2-4}$ alkylene unit is specified.

Apparatus: type AL400 nuclear magnetic resonance spectrometer, manufactured by JEOL Ltd.

Observation frequency: 395.88 MHz
Pulse width: 6.30 ps
Pulse repeating time: 74.1411 seconds
Number of integrations: 32
Measurement temperature: room temperature (20 to 35°C)
Reference: 7.24 ppm
Sample tube diameter: 5 mm

From the $^1$H-NMR spectrum, an integrated value ($V_1$) of the peak at which the chemical shift is present in the range of 3.2 ppm or more and 3.8 ppm or less is determined. In addition, for each of the hydrogen atoms of the $-CH_2-$ group and the $-CH<$ group bonded to the oxygen atom bonded to the terminal group of the polymer compound, the sum

($V_2$) of integrated values of peaks in the $^1$H-NMR spectrum is determined. Then, from $V_1$ and $V_2$, a ratio of $V_1$ to the sum of $V_1$ and $V_2$ (= $V_1/(V1 + V_2) \times 100$ (%)) is determined.

When the integrated value of the peak in the $^1$H-NMR spectrum is determined in the qualitative analysis, two points having no significant signal are determined so as to sandwich the corresponding peak in the $^1$H-NMR spectrum, and each integrated value is calculated using a straight line connecting the two points as a baseline. For example, for the peak in which the chemical shift is present in the range of 3.2 ppm to 3.8 ppm, a straight line connecting two points of 3.2 ppm and 3.8 ppm in the spectrum is used as a baseline. For example, for a peak in which the chemical shift is present in a range of more than 3.8 ppm and 4.0 ppm or less, a straight line connecting two points of 3.8 ppm and 4.0 ppm in the spectrum is used as a baseline.

(b) Analysis of hydrophobic group in esterified product

When the polymer compound is an esterified product of a hydroxy compound, in (a) above, a predetermined amount of a polymer compound obtained by drying a chloroform solution in which the polymer compound obtained by extraction is dissolved is collected, and an aqueous potassium hydroxide solution is added. As a result, the esterified product is saponified to produce a fatty acid potassium salt and a hydroxy compound. The aqueous water-soluble potassium solution is added until saponification is completed. The fatty acid potassium salt is converted to a fatty acid methyl ester by adding a solution of methanol and boron trifluoride to the resulting mixture and mixing. The resulting mixture is analyzed by pyrolysis GC-MS under the following conditions to identify a hydrophobic group contained in the esterified product.

> Analyzer: high-performance general-purpose gas chromatogram GC-2014 manufactured by Shimadzu Corporation
> Column: DEGS (diethylene glycol succinate ester) 2.1 m
> Oven temperature: 180 to 120°C
> Inlet temperature: 240°C
> Detector temperature: 240°C
> Carrier gas: He (flow rate: 50 mL/min)
> Injection amount: 1 pL to 2 μL

(c) Analysis of hydrophobic group in etherified product

When the polymer compound is an etherified product of a hydroxy compound, in (a) above, a predetermined amount of a polymer compound obtained by drying a chloroform solution in which the polymer compound obtained by extraction is dissolved is collected, and hydrogen iodide is added. This produces an iodide ($R^3I$) corresponding to the organic group of the ether moiety of the polymer compound ($R^3$ described above), and also produces a diiodo $C_{2-4}$ alkane corresponding to the oxy $C_{2-4}$ alkylene unit. The hydrogen iodide is added in an amount sufficient to complete conversion of the etherified product to the iodide product and the diiodo $C_{2-4}$ alkane. The resulting mixture is analyzed by pyrolysis GC-MS under the same conditions as in (b) above to identify a hydrophobic group contained in the etherified product.

(2-2) Quantitative analysis of polymer compound

An appropriate amount of the chloroform soluble component is dissolved in deuterated chloroform together with tetrachloroethane (TCE) of $m_r$ (g) measured with an accuracy of $\pm$ 0.0001 g, and a $^1$H-NMR spectrum is measured. An integrated value ($S_a$) of the peak in which the chemical shift is present in the range of 3.2 to 3.8 ppm and an integrated value ($S_r$) of a peak derived from TCE are determined, and mass-based content $C_n$ (ppm) of the polymer compound in the negative electrode material is determined from the following formula.

$$C_n = S_a/S_r \times N_r/N_a \times M_a/M_r \times m_r/m \times 1{,}000{,}000$$

(wherein $M_a$ is a molecular weight of a structure showing a peak in the chemical shift range of 3.2 to 3.8 ppm (more specifically, a molecular weight of the repeating structure of oxy $C_{2-4}$ alkylene units), and $N_a$ is the number of hydrogen atoms bonded to a carbon atom of a main chain of the repeating structure. $N_r$ and $M_r$ are the number of hydrogen contained in a molecule of reference substance and the molecular weight of the reference substance, respectively, and m (g) is the mass of the negative electrode material used for extraction.)

Since the reference substance in this analysis is TCE, $N_r = 2$ and $M_r = 168$. In addition, m = 100.

For example, when the polymer compound is polypropylene glycol, $M_a$ is 58, and $N_a$ is 3. When the polymer compound is polyethylene glycol, $M_a$ is 44, and $N_a$ is 4. In the case of a copolymer, $N_a$ and $M_a$ are values obtained by averaging $N_a$ values and $M_a$ values of each monomer unit using a molar ratio (mol%) of each monomer unit contained in the repeating structure.

In the quantitative analysis, the integrated value of the peak in the $^1$H-NMR spectrum is determined using data processing software "ALICE" manufactured by JEOL Ltd.

(2-3) Mn Measurement of polymer compound

Using the chloroform soluble component, GPC measurement of the polymer compound is performed under the following conditions using the following apparatuses. Separately, a calibration curve (standard curve) is prepared from a plot of Mn of the standard substance and elution time. The Mn of the polymer compound is calculated based on the standard curve and the GPC measurement result of the polymer compound. However, the esterified product, the etherified product, and the like may be decomposed in the chloroform soluble component.

Analysis system: 20A system (manufactured by Shimadzu Corporation)
Column: two columns of GPC KF-805L (manufactured by Shodex) connected in series
Column temperature: $30°C \pm 1°C$
Mobile phase: tetrahydrofuran
Flow rate: 1 mL/min.
Concentration: 0.20% by mass
Injection amount: 10 pL
Standard substance: polyethylene glycol (Mn = 2,000,000, 200,000, 20,000, 2,000, 200)
Detector: differential refractive index detector (Shodex RI-201H, manufactured by Shodex)

(3) Analysis of organic expander

(3-1) Qualitative analysis of organic expander in negative electrode material

The pulverized sample A is immersed in a 1 mol/L sodium hydroxide aqueous solution to extract the organic expander. Next, insoluble components are removed from the extract by filtration, and the obtained solution is desalted, then concentrated, and dried. The desalination is performed by using a desalination column, by causing the solution to pass through an ion-exchange membrane, or by placing the solution in a dialysis tube and immersing the solution in distilled water. The solution is dried to obtain a powder sample (hereinafter, referred to as a sample B) of the organic expander.

A type of the organic expander is specified using a combination of information obtained from an infrared spectroscopic spectrum measured using the sample B of the organic expander obtained as described above, an ultraviolet-visible absorption spectrum measured by an ultraviolet-visible absorption spectrometer after the sample B is diluted with distilled water or the like, an NMR spectrum of a solution obtained by dissolving the sample B in a predetermined solvent such as heavy water, pyrolysis GC-MS capable of obtaining information on individual compounds constituting a substance, or the like.

(3-2) Quantitative determination of content of organic expander in negative electrode material

Similarly to (3-1) above, for each separated material containing the organic expander, a solution is obtained after removing the insoluble component by filtration. The ultraviolet-visible absorption spectrum of each obtained solution is measured. The content of each organic expander in the negative electrode material is determined using an intensity of a characteristic peak of each organic expander and a calibration curve prepared in advance.

When a lead-acid battery in which the content of the organic expander is unknown is obtained and the content of the organic expander is measured, a structural formula of the organic expander cannot be strictly specified, so that the same organic expander may not be used for the calibration curve. In this case, the content of the organic expander is measured using the ultraviolet-visible absorption spectrum by creating a calibration curve using a separately available organic polymer in which the ultraviolet-visible absorption spectrum, the infrared spectroscopic spectrum, the NMR spectrum, and the like exhibit similar shapes with respect to the organic expander extracted from the negative electrode of the battery.

(4) Quantitative determination of carbonaceous material and barium sulfate

To 10 g of the pulverized sample A, 50 mL of nitric acid having a concentration of 20% by mass is added and heated for about 20 minutes to dissolve the lead component as lead ions. Next, the resulting solution is filtered, and solids such as carbonaceous materials and barium sulfate are filtered off.

The obtained solid is dispersed in water to form a dispersion, and then components except for the carbonaceous material and barium sulfate (e.g., reinforcing material) are removed from the dispersion by using a sieve. Next, the dispersion is subjected to suction filtration using a membrane filter with its mass measured in advance, and the membrane filter is dried with the filtered sample in a dryer at $110°C \pm 5°C$. The filtered sample is a mixed sample of the carbonaceous material and barium sulfate. A mass ($M_m$) of the sample C is measured by subtracting the mass of the membrane filter from the total mass of dried mixed sample (hereinafter, referred to as sample C) and the membrane filter. Thereafter, the sample C is placed in a crucible together with a membrane filter and is burned and incinerated at 1300°C or higher. The residue remaining is barium oxide. The mass ($M_B$) of barium sulfate is determined by converting the mass of barium oxide to the mass of barium sulfate. The mass of the carbonaceous material is calculated by subtracting the mass $M_B$ from the mass $M_m$.

(Others)

The negative electrode plate can be formed in such a manner that a negative current collector is coated or filled with a negative electrode paste, which is then cured and dried to fabricate a non-formed negative electrode plate, and thereafter, the non-formed negative electrode plate is formed. The negative electrode paste is prepared, for example, by adding water and sulfuric acid (or sulfuric acid aqueous solution) to a lead powder, the polymer compound, and if necessary, at least one selected from the group consisting of an organic expander, a carbonaceous material, and other additives, and mixing the mixture. At the time of curing, it is preferable to cure the non-formed negative electrode plate at a higher temperature than room temperature and high humidity.

The formation can be performed by charging the element in a state where the element including the non-formed negative electrode plate immersed in the electrolyte solution containing sulfuric acid in the container of the lead-acid battery. However, the formation may be performed before the lead-acid battery or the element is assembled. The formation produces spongy lead.

(Positive electrode plate)

The positive electrode plate of a lead-acid battery can be classified into a paste type, a clad type, and the like. Either a paste-type or a clad-type positive electrode plate may be used. The paste-type positive electrode plate includes a positive current collector and a positive electrode material. The configuration of the clad-type positive electrode plate is as described above.

The positive current collector may be formed by casting lead (Pb) or a lead alloy, or may be formed by processing a lead sheet or a lead alloy sheet. Examples of the processing method include expanding processing and punching processing. It is preferable to use a grid-like current collector as the positive current collector because the positive electrode material is easily supported.

As a lead alloy used for the positive current collector, a Pb-Sb-based alloy, a Pb-Ca-based alloy, or a Pb-Ca-Sn-based alloy are preferred in terms of corrosion resistance and mechanical strength. The positive current collector may include a surface layer. The surface layer and the inner layer of the positive current collector may have different compositions. The surface layer may be formed in a part of the positive current collector. The surface layer may be formed only on the grid portion, only on the lug portion, or only on the frame rib portion of the positive current collector.

The positive electrode material contained in the positive electrode plate contains a positive active material (lead dioxide or lead sulfate) that exhibits a capacity through a redox reaction. The positive electrode material may optionally contain another additive.

A non-formed paste-type positive electrode plate is obtained by filling a positive current collector with a positive electrode paste, and curing and drying the paste. The positive electrode paste is prepared by kneading lead powder, an additive, water, and sulfuric acid. A non-formed clad-type positive electrode plate is formed by filling a porous tube, into which a spine connected by a current collecting portion is inserted, with lead powder or a slurry-like lead powder, and joining a plurality of tubes with a joint. Thereafter, the positive electrode plate is obtained by forming the non-formed positive electrode plates. The formation can be performed by charging the element in a state where the element including the non-formed positive electrode plate immersed in the electrolyte solution containing sulfuric acid in the container of the lead-acid battery. However, the formation may be performed before the lead-acid battery or the element is assembled.

The formation can be performed by charging the element in a state where the element including the non-formed positive electrode plate immersed in the electrolyte solution containing sulfuric acid in the container of the lead-acid battery. However, the formation may be performed before the lead-acid battery or the element is assembled.

(Separator)

The separator can be disposed between the negative electrode plate and the positive electrode plate. As the separator, at least one selected from a nonwoven fabric and a microporous membrane, and the like are used.

The nonwoven fabric is a mat in which fibers are intertwined without being woven and is mainly made of fibers. In the nonwoven fabric, for example, 60% by mass or more of the nonwoven fabric is formed of fibers. As the fibers, there can be used glass fibers, polymer fibers (polyolefin fiber, acrylic fiber, polyester fiber (polyethylene terephthalate fiber, or the like), and the like), pulp fibers, and the like. Among these, glass fibers are preferable. The nonwoven fabric may contain components in addition to the fibers, such as acid-resistant inorganic powder, a polymer as a binder, and the like.

On the other hand, the microporous film is a porous sheet mainly made of components except for fiber components and is obtained by, for example, extrusion molding a composition containing, for example, a pore-forming additive into a sheet shape and then removing the pore-forming additive to form pores. The microporous film is preferably made of a material having acid resistance and is preferably composed mainly of a polymer component. As the polymer material, a polyolefin (polyethylene, polypropylene, etc.). is preferred. Examples of the pore-forming additive include at least one selected from the group consisting of a polymer powder and oil.

The separator may be, for example, made of only a nonwoven fabric or made of only a microporous film. The separator may be, when required, a laminate of a nonwoven fabric and a microporous film, a laminate of different or the same kind of materials, or a laminate of different or the same kind of materials in which recesses and projections are engaged to each other.

The separator may have a sheet shape or may be formed in a bag shape. One sheet-like separator may be disposed between the positive electrode plate and the negative electrode plate. Further, the electrode plate may be disposed so as to be sandwiched by one sheet-like separator in a folded state. In this case, the positive electrode plate sandwiched by the folded sheet-like separator and the negative electrode plate sandwiched by the folded sheet-like separator may be overlapped, or one of the positive electrode plate and the negative electrode plate may be sandwiched by the folded sheet-like separator and overlapped with the other electrode plate. Also, the sheet-like separator may be folded into a bellows shape, and the positive electrode plate and the negative electrode plate may be sandwiched by the bellows-shaped separator such that the separator is interposed therebetween. When the separator folded in a bellows shape is used, the separator may be disposed such that the folded part is along the horizontal direction of the lead-acid battery (e.g., such that the bent part may be parallel to the horizontal direction), and the separator may be disposed such that the folded part is along the vertical direction (e.g., such that the bent part is parallel to the vertical direction). In the separator folded in the bellows shape, recesses are alternately formed on both main surface sides of the separator. Since the lug parts are usually formed on the upper portion of the positive electrode plate and the negative electrode plate, when the separator is disposed such that the folded portions are along the horizontal direction of the lead-acid battery, the positive electrode plate and the negative electrode plate are each disposed only in the recess on one main surface side of the separator (i.e., a double separator is interposed between the adjacent positive and negative plates). When the separator is disposed such that the folded portion is along the vertical direction of the lead-acid battery, the positive electrode plate can be housed in the recess on one main surface side, and the negative electrode plate can be housed in the recess on the other main surface side (i.e., the separator can be interposed singly between the adjacent positive and negative plates). When the bag-shaped separator is used, the bag-shaped separator may house the positive electrode plate or may house the negative electrode plate.

(Electrolyte solution)

The electrolyte solution is an aqueous solution containing sulfuric acid and may be gelled as necessary.

The polymer compound may be contained in the electrolyte solution.

The electrolyte solution may contain cations (for example, metal cations) and/or anions (for example, anions other than sulfate anions (such as phosphate ions)) if necessary. Examples of the metal cation include at least one selected from the group consisting of a Na ion, a Li ion, a Mg ion, and an Al ion.

The specific gravity of the electrolyte solution in the lead-acid battery in a fully charged state at 20°C is, for example, 1.20 or more and may be 1.25 or more. The specific gravity of the electrolyte solution at 20°C is 1.35 or less and preferably 1.32 or less.

The specific gravity of the electrolyte solution at 20°C may be 1.20 or more and 1.35 or less, 1.20 or more and 1.32 or less, 1.25 or more and 1.35 or less, or 1.25 or more and 1.32 or less.

(Others)

The lead-acid battery can be obtained by a manufacturing method including a step of storing an element and an electrolyte solution in a cell chamber of a container. Each cell of the lead-acid battery includes an element and an electrolyte solution stored in each cell chamber. The element is assembled by stacking a positive electrode plate, a negative electrode plate, and a separator such that the separator is interposed between the positive electrode plate and the negative electrode plate prior to storage in the cell chamber. The positive electrode plate, the negative electrode plate, the electrolyte solution, and the separator are each prepared prior to assembly of the element. A method of manufacturing the lead-acid battery may include a step of forming at least one of the positive electrode plate and the negative electrode plate as necessary after a step of storing the element and the electrolyte solution in the cell chamber.

The number of electrode plates in the element may be one or two or more. When the element includes two or more negative electrode plates, in at least one negative electrode plate, if the negative electrode material contains carbon black in the above content and the negative current collector is roughened in the range of the surface roughness Ra, it is possible to suppress falling off of the negative active material of the negative electrode plate and to realize a long life, and it is easy to realize a long life according to the number of such negative electrode plates. Also, in at least one negative electrode plate, when the negative electrode material contains a polymer compound, the low-temperature high-rate discharge characteristics of the negative electrode plate can be enhanced, and the low-temperature high-rate discharge characteristics are further improved according to the number of such negative electrode plates. From the viewpoint of suppressing falling off of the negative active material and realizing a long life and/or enhancing the high-rate discharge characteristics, it is preferable that 50% or more (more preferably 80% or more or 90% or more) of the number of negative electrode plates included in the element satisfy the above condition. Among the negative electrode plates included in the element, a ratio of the negative electrode plates satisfying the above condition is 100% or less. All negative electrode plates included in the element may satisfy the above condition.

When the lead-acid battery has two or more cells, the elements of at least some cells may have the negative electrode plate satisfying the condition as described above. From the viewpoint of suppressing falling off of the negative active material and realizing a long life and/or enhancing the high-rate discharge characteristics, it is preferable that 50% or more (more preferably 80% or more or 90% or more) of the number of cells included in the lead-acid battery includes the element including the negative electrode plate satisfying the above condition. Among the cells included in the lead-acid battery, a ratio of the cells including the element including the negative electrode plate satisfying the above condition is 100% or less. It is preferable that all elements included in the lead-acid battery include the negative electrode plate satisfying the above condition.

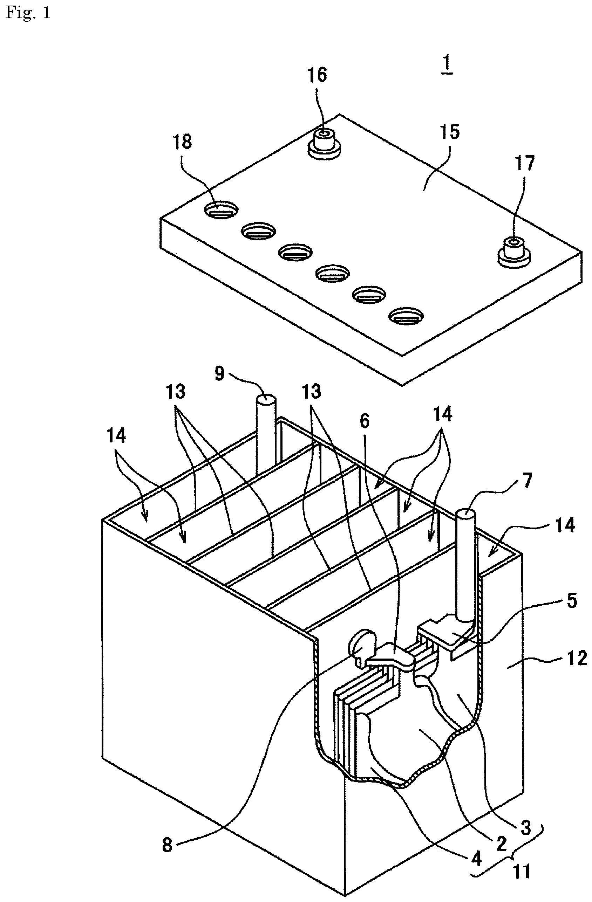

Fig. 1 shows an appearance of an example of a lead-acid battery according to an embodiment of the present invention.

A lead-acid battery 1 includes a container 12 that houses an element 11 and an electrolyte solution (not shown). An inside of the container 12 is partitioned by partitions 13 into a plurality of cell chambers 14. Each of the cell chambers 14 contains one element 11. An opening of the container 12 is closed with a lid 15 having a negative electrode terminal 16 and a positive electrode terminal 17. A vent plug 18 is provided in the lid 15 for each cell chamber. At the time of water addition, the vent plug 18 is removed to supply a water addition liquid. The vent plug 18 may have a function of discharging gas generated in the cell chamber 14 to the outside of the battery.

The element 11 is configured by laminating a plurality of negative electrode plates 2 and a plurality of positive electrode plates 3 with a separator 4 interposed therebetween. At this point, the bag-shaped separator 4 accommodating the negative electrode plate 2 is illustrated, but the form of the separator is not particularly limited. In the cell chamber 14 located at one end of the container 12, a negative electrode shelf 6 connecting the plurality of negative electrode plates 2 in parallel is connected to a penetrating connection body 8, and a positive electrode shelf 5 connecting the plurality of positive electrode plates 3 in parallel is connected to a positive pole 7. The positive pole 7 is connected to the positive electrode terminal 17 outside the lid 15. In the cell chamber 14 located at the other end of the container 12, a negative pole 9 is connected to the negative electrode shelf 6, and the penetrating connection body 8 is connected to the positive electrode shelf 5. The negative pole 9 is connected to the negative electrode terminal 16 outside the lid 15. Each penetrating connection body 8 passes through a through-hole made in the partition 13 to connect the elements 11 of the adjacent cell chambers 14 in series.

The positive electrode shelf portion 5 is formed by welding the lug parts, provided on the upper portions of the respective positive electrode plates 3, to each other by a cast-on-strap method or a burning method. The negative electrode shelf 6 is also formed by welding the lug parts, provided on the upper parts of the respective negative electrode plates 2, to each other in accordance with the case of the positive electrode shelf 5.

The lid 15 of the lead-acid battery has a single structure (single lid), but is not limited to the illustrated examples. The lid 15 may have, for example, a double structure including an inner lid and an outer lid (or an upper lid). The lid having the double structure may have a reflux structure between the inner lid and the outer lid for returning the electrolyte solution into the battery (inside the inner lid) through a reflux port provided in the inner lid.

In the present specification, performance of the lead-acid battery is evaluated by the following procedure. A test battery used for the evaluation has a rated voltage of 2 V/cell and a rated five-hour rate capacity of 32 Ah.

(a) PSOC Cycle life

Using the test battery, evaluation is performed under the following conditions.

The test battery is charged at a constant voltage of 2.4 V/cell at 25°C, and then discharged at a constant current at a current (A) 0.2 times the numerical value described in rated capacity (Ah) until the depth of discharge (DOD) of the test battery reaches 10%. Next, the following discharge 1 and charge 1 are taken as one cycle, and repeated until discharge end voltage becomes 1.75 V/cell or less. The number of cycles when the discharge end voltage becomes 1.75 V/cell or less is evaluated as the number of PSOC cycles.

Discharge 1: Discharge is performed for 30 seconds at a current (A) 2 times the numerical value described in the rated capacity (Ah).

Charge 1: Charge is performed for 1 minute at the current (A) of the numerical value described in the rated capacity (Ah).

In addition, the battery after the above test is disassembled, and the electrode material falling off the bottom of the container is taken out. The electrode material is washed with water and dried, and then the mass (g/cell) of the fallen electrode material is measured. At this time, the states of the positive electrode plate and the negative electrode plate are visually confirmed, and whether the fallen electrode material is derived from the positive electrode material or the negative electrode material is confirmed.

(b) Low-temperature high-rate discharge performance

Evaluation is performed under the following conditions in accordance with JIS D 5301: 2006.

The test battery is charged at a constant current at a current (A) 0.2 times the numerical value described in the rated capacity (Ah). Charge is performed until a terminal voltage during charge measured every fifteen minutes or an electrolyte solution density subjected to temperature correction exhibits a constant value continuously three times. The test battery is then placed in an environment of -15°C ± 1°C for a minimum of 16 hours. The test battery is discharged at a constant current at a current (A) 0.2 times the numerical value (Ah) of the rated capacity at -15°C. A time until the discharge end current decreases to 1.0 V/cell or less is measured and evaluated as low-temperature high-rate duration time.

The lead-acid battery according to one aspect of the present invention will be described below.

(1) A lead-acid battery including:

a negative electrode plate, a positive electrode plate, and an electrolyte solution, in which
the negative electrode plate includes a negative current collector and a negative electrode material, and
the negative electrode material contains a carbonaceous material,
a content of the carbonaceous material in the negative electrode material is 0.9% by mass or more, and
an arithmetic average roughness Ra of a surface of the negative current collector is 1 pm or more and 22 pm or less.

(2) In (1) above, a density of the negative electrode material may be 3.4 g/cm$^3$ or more.

(3) In (2) above, the density of the negative electrode material may be 4.1 g/cm$^3$ or less or 3.8 g/cm$^3$. That is, the density of the negative electrode material may be 3.4 g/cm$^3$ or more and 4.1 g/cm$^3$ or less, or 3.4 g/cm$^3$ or more and 3.8 g/cm$^3$.

(4) In any one of (1) to (3) above, the arithmetic average roughness Ra of the surface of the negative current collector may be 15 pm or less or 10 pm or less.

(5) In any one of (1) to (4) above, the arithmetic average roughness Ra of the surface of the negative current collector may be 1 pm or more and 15 pm or less, 1 pm or more and 10 pm or less, 2 pm or more and 15 pm or less, 2 pm or more and 10 pm or less, 4 pm or more and 15 pm or less, or 4 pm or more and 10 pm or less.

(6) In any one of (1) to (5) above, the negative current collector may be a punched current collector.

(7) In any one of (1) to (6) above, the content of the carbonaceous material in the negative electrode material may be 1.5% by mass or more.

(8) In any one of (1) to (7) above, the content of the carbonaceous material in the negative electrode material may be 5% by mass or less, 3% by mass or less, or 2.1% by mass or less.

(9) In any one of (1) to (8) above, the negative electrode material may contain a polymer compound having a peak in a range of 3.2 ppm or more and 3.8 ppm or less in a chemical shift of $^1$H-NMR spectrum measured using deuterated chloroform as a solvent.

(10) A lead-acid battery including:

a negative electrode plate, a positive electrode plate, and an electrolyte solution, in which
the negative electrode plate includes a negative current collector and a negative electrode material, and
the negative electrode material contains a carbonaceous material,
a content of the carbonaceous material in the negative electrode material is 0.3% by mass or more, and
the negative electrode material contains a polymer compound having a peak in a range of 3.2 ppm or more and
3.8 ppm or less in a chemical shift of $^1$H-NMR spectrum measured using deuterated chloroform as a solvent.

(11) In (9) or (10) above, the polymer compound may contain an oxygen atom bonded to a terminal group and a -$CH_2$- group and/or a -CH< group bonded to the oxygen atom, and
in the $^1$H-NMR spectrum, a ratio of an integrated value of the peak to a sum of the integrated value of the peak, an integrated value of a peak of a hydrogen atom of the -$CH_2$- group, and an integrated value of a peak of a hydrogen atom of the -CH< group may be 50% or more, 80% or more, 85% or more, or 90% or more.

(12) In any one of (9) to (11) above, the polymer compound may contain a repeating structure of oxy $C_{2-4}$ alkylene units.

(13) In any one of (9) to (12) above, the polymer compound may contain a compound having Mn of 5 million or less, 3 million or less, 2 million or less, 500,000 or less, 100,000 or less, 50,000 or less, 20,000 or less, 10,000 or less, 5,000 or less, 4,000 or less, 3,000 or less, or 2,500 or less.

(14) In any one of (9) to (13) above, the polymer compound may contain a compound having Mn of 300 or more, 400 or more, 500 or more, 1,000 or more, 1,500 or more, or 1,800 or more.

(15) In any one of (9) to (14) above, the polymer compound may contain at least one selected from the group consisting of a hydroxy compound having a repeating structure of oxy $C_{2-4}$ alkylene units, an etherified product of the hydroxy compound, and an esterified product of the hydroxy compound, and
the hydroxy compound may be at least one selected from the group consisting of poly $C_{2-4}$ alkylene glycol, a copolymer containing a repeating structure of oxy $C_{2-4}$ alkylene, and a $C_{2-4}$ alkylene oxide adduct of a polyol.

(16) In (15) above, the polymer compound may contain at least one selected from the group consisting of polyethylene glycol oleate, polyethylene glycol dilaurate, polyethylene glycol distearate, and polyethylene glycol dioleate.

(17) In any one of (9) to (16) above, a content of the polymer compound in the negative electrode material may be 30 ppm or more and 600 ppm or less on a mass basis.

(18) In any one of (9) to (17) above, the content of the carbonaceous material in the negative electrode material may be 0.9% by mass or more or 1.5% by mass or more.

(19) In any one of (9) to (18) above, the content of the carbonaceous material in the negative electrode material may be 5% by mass or less, 3% by mass or less, or 2.1% by mass or less.

(20) In any one of (1) to (19) above, the carbonaceous material may contain carbon black.

EXAMPLES

Hereinafter, the present invention will be specifically described based on examples and comparative examples, but the present invention is not limited to the following examples.

<<Lead-acid batteries A1 to A39, B1 to B8>>

(1) Preparation of lead-acid battery

(a) Preparation of negative electrode plate

A punched current collector made of a Pb-Ca-Sn alloy is prepared. If necessary, surfaces of a longitudinal rib and a lateral rib of the current collector are pressed against a predetermined mold to obtain a negative current collector in which the roughness of the surface of the current collector is the arithmetic average surface roughness Ra shown in Table 1 or 2.

Subsequently, a lead powder as a raw material, barium sulfate, carbon black, and sodium lignin sulfonate as the organic expander are mixed with an appropriate amount of a sulfuric acid aqueous solution to obtain a negative electrode paste. At this time, the components are mixed so that the content of carbon black in the negative electrode material is a value shown in Table 1 or 2, the content of the organic expander is 0.1% by mass, and the content of barium sulfate is 0.4% by mass, each of which is determined by the procedure described above. Also, for the lead-acid battery fully charged after formation, the concentration and amount of the sulfuric acid aqueous solution are controlled so that the density (bulk density) of the negative electrode material determined by the procedure described above is the value shown in Table 1 or 2. A mesh portion of the punched current collector is filled with the negative electrode paste, which is then cured and dried to obtain a non-formed negative electrode plate.

(b) Preparation of positive electrode plate

Lead powder as raw material is mixed with a sulfuric acid aqueous solution to obtain a positive electrode paste. A punched current collector made of a Pb-Ca-Sn alloy is prepared. A mesh portion of the punched current collector is filled with the positive electrode paste, which is then cured and dried to obtain a non-formed positive electrode plate.

(c) Preparation of test battery

A test battery has a rated voltage of 2 V/cell and a rated 5-hour rate capacity of 32 Ah. An element of the test battery includes seven positive electrode plates and seven negative electrode plates. The negative electrode plate is housed in a bag-shaped separator formed of a polyethylene microporous film, and alternately stacked with the positive electrode plate to form the element. The element is housed in a polypropylene container together with an electrolyte solution (sulfuric acid aqueous solution), and subjected to formation in the container to prepare a flooded-type lead-acid battery. The specific gravity of the electrolyte solution in the lead-acid battery in the fully charged state at 20°C is 1.28.

Batteries A1 to A39 (Examples or Comparative Examples) and B1 to B8 (Reference Examples) having different combinations of the density of the negative electrode material, the content of carbon black in the negative electrode material, and/or the arithmetic average surface roughness Ra of the surface of the negative current collector are prepared and evaluated as described later.

<<Lead-acid batteries C1 to C32>>

In preparation of a negative electrode plate, a lead powder as a raw material, barium sulfate, carbon black, polyethylene glycol oleate (PEG/OL) (Mn 500) as a polymer compound, and sodium lignin sulfonate as an organic expander are mixed with an appropriate amount of a sulfuric acid aqueous solution to obtain a negative electrode paste. At this time, the components are mixed so that the content of carbon black in the negative electrode material is a value shown in Table 3, the content of the polymer compound is 0.025% by mass (250 ppm), the content of the organic expander is 0.1% by mass, and the content of barium sulfate is 0.4% by mass, each of which is determined by the procedure described above. At this time, for the lead-acid battery fully charged after formation, the concentration and amount of the sulfuric acid aqueous solution are controlled so that the density (bulk density) of the negative electrode material determined by the procedure described above is the value shown in Table 3. A mesh portion of the punched current collector is filled with the negative electrode paste, which is then cured and dried to obtain a non-formed negative electrode plate.

Batteries C1 to C32 (Examples) are obtained in the same manner as the batteries A1 to A39 except for this, and are evaluated in the same manner.

When the polymer compound has a repeating structure of oxyethylene units, in the $^{1}$H-NMR spectrum of the polymer compound measured by the procedure described above, a peak derived from -$CH_2$- of the oxyethylene unit is observed in a chemical shift range of 3.6 ppm or more and 4.3 ppm or less. When the polymer compound has a repeating structure of oxyethylene units, in the $^{1}$H-NMR spectrum of the polymer compound measured by the procedure described above, a peak derived from -$CH_2$- of the oxypropylene unit is observed in a chemical shift range of 3.2 ppm or more and 3.42 ppm or less, and a peak derived from -CH< and -$CH_2$-of the oxypropylene unit is observed in a chemical shift range of more than 3.42 ppm and 3.8 ppm or less. In addition, in the $^{1}$H-NMR spectrum, a ratio of an integrated value of the peak of 3.2 ppm to 3.8 ppm to the sum of the integrated value of this peak, an integrated value of a peak of hydrogen atoms of the -$CH_2$- group bonded to the oxygen atom, and an integrated value of a peak of a hydrogen atom of the -CH< group bonded to the oxygen atom is 96.21 to 99.99%.

<<Lead-acid batteries D1 to D8>>

In preparation of a negative electrode plate, a lead powder as a raw material, barium sulfate, carbon black, polymer compounds shown in Table 4, and sodium lignin sulfonate as an organic expander are mixed with an appropriate amount of a sulfuric acid aqueous solution to obtain a negative electrode paste. At this time, the polymer compound is mixed with the negative electrode paste so that the content of the polymer compound in the negative electrode material determined by the procedure described above is the content shown in Table 4.

Batteries D1 to D8 (Examples) are obtained in the same manner as the battery C32 except for this, and are evaluated in the same manner.

In Table 4, PEG is polyethylene glycol (Mn 500), PEG/OL is polyethylene glycol oleate (Mn 500), PEG/DL is polyethylene glycol dilaurate (Mn 630), PEG/DS is polyethylene glycol distearate (Mn 820), and PPG is polypropylene glycol (Mn 2000).

(2) Evaluation

(a) PSOC Cycle life

Using the above test battery, the number of PSOC cycles is measured by the procedure described above. The PSOC life characteristics of each lead-acid battery are evaluated by a ratio when the number of PSOC cycles of the lead-acid battery A1 is 100.
In addition, the battery after the test is disassembled, and the amount of falling off of the electrode material is measured. The amount of falling off of the electrode material in each battery is evaluated at a ratio where the amount of falling off of the electrode material in the battery A9 is 100.

(b) Low-temperature high-rate discharge performance

The low-temperature high-rate duration time is measured by the above-described procedure using the test battery. The low-temperature high-rate discharge performance of each lead-acid battery is evaluated by a ratio when the duration time of the lead-acid battery A1 is 100.
Table 1 and Table 2 show the results. In Table 1, group G1 including the batteries A1 to A13, group G2 including the batteries A14 to A26, and group G3 including the batteries A27 to A39 are different from each other in the content of carbon black in the negative electrode material, so that a simple comparison cannot be made. The batteries A1 to A4 and A13 are comparative examples to Examples A5 to A12. The batteries A14 to A17 and A26 are comparative examples to Examples A5 to A12. The batteries A27 to A30 and A39 are comparative examples to Examples A31 to A38.
As shown in Table 2, in the batteries B1 to B8 in which the content of carbon black in the negative electrode material is 0.3% by mass, the amount of falling off of the electrode material is extremely small, and the falling off of the electrode material is not a life factor.
As shown in Table 1, when group G1 (batteries A1 to A13) in which the content of carbon black is 0.9% by mass, group G2 (batteries A4 to A26) in which the content of carbon black is 1.5% by mass, and group G3 (batteries A27 to A39) in which the content of carbon black is 2.1% by mass are compared, the number of PSOC cycles tends to increase and the PSOC life characteristics tend to improve as the content of carbon black in the negative electrode material is increased. On the other hand, the amount of falling off of the electrode material is significantly larger than that of the batteries B1 to B8. From the state of the positive electrode plate and the negative electrode plate after the test, falling off of the electrode material occurs in the negative electrode. This suggests that the factor of life of the lead-acid battery has changed to falling off of the negative electrode material as the amount of carbon black increases.
However, as shown in Table 1, by roughening the negative current collector and setting the arithmetic average roughness Ra of the surface of the negative current collector to 1 pm or more, adhesion between the negative current collector and the negative electrode material is improved, and falling off of the negative electrode material is suppressed. As a result, when the content of carbon black is increased to 0.9% by mass or more, the PSOC life characteristics are further improved.
In the group G3, as shown in the batteries A27 to A35, by increasing the density of the negative electrode material, the amount of falling off of the negative electrode material decreases. However, in the battery A30 in which the surface roughness Ra of the negative current collector is less than 1 pm, by increasing the density of the negative electrode material, the amount of falling off is reduced to 90% of the amount of falling off of the battery A27, but the reduction amount is small. On the other hand, in the battery A35 in which the surface roughness Ra of the negative current collector is 1 pm or more, by increasing the density of the negative electrode material, the amount of falling off is reduced to nearly 70% of the amount of falling off of the battery A27, and the amount of falling off is remarkably reduced. As a result, the battery A35 can obtain a remarkably high PSOC life.

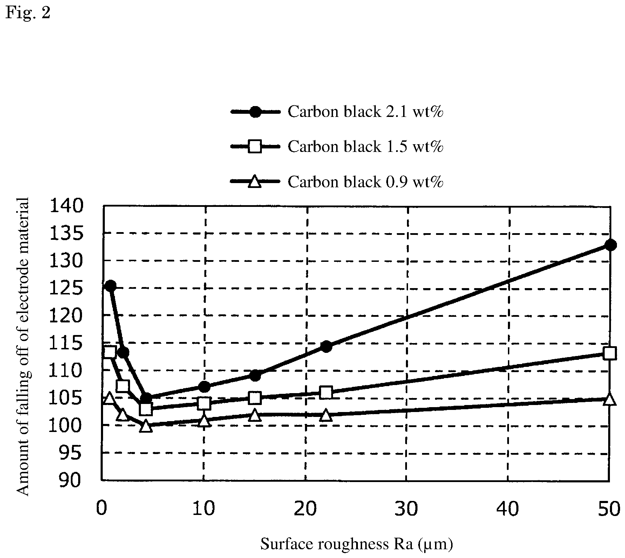

Fig. 2 is a graph showing a relationship between the surface roughness Ra of the negative current collector and the amount of falling off of the electrode material (negative electrode material) after the end of the PSOC cycle test. In Fig. 2, the amount of falling off is shown as a relative value where the amount of falling off of the battery A9 having a carbon black content of 0.9% by mass and a surface roughness Ra of the negative current collector of 4.3 pm is 100. From Fig. 2, it can be seen that the amount of falling off of the negative electrode material is remarkably reduced when the surface roughness Ra is 1 pm or more with the surface roughness Ra of 1 pm as a boundary, which does not substantially depend on the content of carbon black.
In addition, from Tables 1 and 2, it is found that the low-temperature high-rate discharge performance tends to decrease as the content of carbon black is increased. However, as shown in Tables 3 and 4, reduced low-temperature high-rate discharge performance can be restored by addition of the polymer compound. For example, by the addition of the polymer compound, batteries C25 to C32 to which carbon black is added in a large amount of 2.1% by mass exhibit higher low-temperature high-rate discharge performance than the batteries B1 to B8 in which the amount of carbon black is not increased.

When the battery B8 and the battery C8 are compared with each other, in the case of having a content of carbon black of 0.3% by mass, the improvement rate of the low-temperature high-rate discharge performance by the addition of the polymer compound is about 7.5%. On the other hand, when the battery A35 and the battery C32 are compared with each other, the improvement rate of the low-temperature high-rate discharge performance in the case of having a content of carbon black of 2.1% by mass is about 10%, and the improvement rate of the low-temperature high-rate discharge performance by the addition of the polymer compound is larger as the content of carbon black is increased.

As can be seen from Table 4, when the addition amount of the polymer compound is changed from 0.025% by mass (250 ppm), and also when the type of the polymer compound is changed, a high effect of improving the low-temperature high-rate discharge performance is similarly obtained. Particularly, when the addition amount of the polymer compound is in the range of 0.003% by mass (30 ppm) or more and 0.06% by mass (600 ppm), the improvement of the low-temperature high-rate discharge performance is remarkable.

[Table 1]

| Battery | Negative electrode material | | Negative current collector | Number of PSOC cycles | Amount of falling off of electrode material | Low-temperature high-rate discharge duration time |
|---|---|---|---|---|---|---|
| | Carbon black content (% by mass) | Density (g/cm$^3$) | Surface roughness Ra (μm) | | | |
| A1 | 0.9 | 3.0 | 0.7 | 100 | 121 | 100 |
| A2 | 0.9 | 3.3 | 0.7 | 101 | 112 | 99.3 |
| A3 | 0.9 | 3.4 | 0.7 | 103 | 110 | 99.7 |
| A4 | 0.9 | 3.8 | 0.7 | 105 | 105 | 99.3 |
| A5 | 0.9 | 3.8 | 2 | 106 | 102 | 99.3 |
| A6 | 0.9 | 3.0 | 4.3 | 103 | 105 | 99.7 |
| A7 | 0.9 | 3.3 | 4.3 | 105 | 103 | 98.9 |
| A8 | 0.9 | 3.4 | 4.3 | 106 | 102 | 98.5 |
| A9 | 0.9 | 3.8 | 4.3 | 107 | 100 | 98.2 |
| A10 | 0.9 | 3.8 | 10 | 105 | 101 | 98.5 |
| A11 | 0.9 | 3.8 | 15 | 106 | 102 | 98.5 |
| A12 | 0.9 | 3.8 | 22 | 106 | 102 | 98.9 |
| A13 | 0.9 | 3.8 | 50 | 106 | 105 | 98.6 |
| A14 | 1.5 | 3.0 | 0.7 | 101 | 126 | 98.9 |
| A15 | 1.5 | 3.3 | 0.7 | 105 | 117 | 98.9 |
| A16 | 1.5 | 3.4 | 0.7 | 107 | 115 | 98.2 |
| A17 | 1.5 | 3.8 | 0.7 | 108 | 113 | 97.8 |
| A18 | 1.5 | 3.8 | 2 | 109 | 107 | 97.4 |
| A19 | 1.5 | 3.0 | 4.3 | 102 | 110 | 98.2 |
| A20 | 1.5 | 3.3 | 4.3 | 107 | 106 | 97.8 |
| A21 | 1.5 | 3.4 | 4.3 | 108 | 105 | 97.4 |
| A22 | 1.5 | 3.8 | 4.3 | 110 | 103 | 97.4 |
| A23 | 1.5 | 3.8 | 10 | 100 | 104 | 101 |
| A24 | 1.5 | 3.8 | 15 | 100 | 105 | 100 |
| A25 | 1.5 | 3.8 | 22 | 102 | 106 | 99 |
| A26 | 1.5 | 3.8 | 50 | 105 | 113 | 97.5 |
| A27 | 2.1 | 3.0 | 0.7 | 110 | 143 | 97.8 |
| A28 | 2.1 | 3.3 | 0.7 | 111 | 131 | 97.0 |
| A29 | 2.1 | 3.4 | 0.7 | 112 | 128 | 97.0 |
| A30 | 2.1 | 3.8 | 0.7 | 114 | 125 | 96.7 |
| A31 | 2.1 | 3.8 | 2 | 113 | 113 | 97.7 |
| A32 | 2.1 | 3.0 | 4.3 | 114 | 113 | 97.4 |
| A33 | 2.1 | 3.3 | 4.3 | 117 | 108 | 97.0 |
| A34 | 2.1 | 3.4 | 4.3 | 119 | 106 | 96.7 |
| A35 | 2.1 | 3.8 | 4.3 | 128 | 105 | 95.9 |
| A36 | 2.1 | 3.8 | 10 | 126 | 107 | 101 |
| A37 | 2.1 | 3.8 | 15 | 124 | 109 | 100 |
| A38 | 2.1 | 3.8 | 22 | 120 | 114 | 100 |
| A39 | 2.1 | 3.8 | 50 | 117 | 133 | 98.9 |

[Table 2]

| Battery | Negative electrode material | | Negative current collector | Number of PSOC cycles | Amount of falling off of electrode material | Low-temperature high-rate discharge duration time |
|---|---|---|---|---|---|---|
| | Carbon black content (% by mass) | Density (g/cm³) | Surface roughness Ra (μm) | | | |
| B1 | 0.3 | 3.0 | 0.7 | 97 | 1.8 | 101.1 |
| B2 | 0.3 | 3.3 | 0.7 | 97 | 1.1 | 100.8 |
| B3 | 0.3 | 3.4 | 0.7 | 98 | 0.8 | 100.4 |
| B4 | 0.3 | 3.8 | 0.7 | 98 | 0.6 | 100.4 |
| B5 | 0.3 | 3.0 | 4.3 | 99 | 0.9 | 100.4 |
| B6 | 0.3 | 3.3 | 4.3 | 100 | 0.6 | 100.0 |
| B7 | 0.3 | 3.4 | 4.3 | 103 | 0.4 | 99.3 |
| B8 | 0.3 | 3.8 | 4.3 | 105 | 0.3 | 100.4 |

[Table 3]

PEG/OL Addition (0.025% by mass)

| Battery | Carbon black content (% by mass) | Density (g/cm³) | Negative current collector | Number of PSOC cycles | Low-temperature high-rate discharge duration time |
|---|---|---|---|---|---|
| | | | Surface roughness Ra (μm) | | |
| C1 | 0.3 | 3.0 | 0.7 | 97 | 108.8 |
| C2 | 0.3 | 3.3 | 0.7 | 97 | 109.9 |
| C3 | 0.3 | 3.4 | 0.7 | 98 | 110.3 |
| C4 | 0.3 | 3.8 | 0.7 | 99 | 109.5 |
| C5 | 0.3 | 3.0 | 4.3 | 100 | 108.0 |
| C6 | 0.3 | 3.3 | 4.3 | 101 | 108.4 |
| C7 | 0.3 | 3.4 | 4.3 | 103 | 108.0 |
| C8 | 0.3 | 3.8 | 4.3 | 105 | 108.0 |
| C9 | 0.9 | 3.0 | 0.7 | 100 | 108.0 |
| C10 | 0.9 | 3.3 | 0.7 | 101 | 108.0 |
| C11 | 0.9 | 3.4 | 0.7 | 103 | 107.6 |
| C12 | 0.9 | 3.8 | 0.7 | 105 | 107.3 |
| C13 | 0.9 | 3.0 | 4.3 | 103 | 107.3 |
| C14 | 0.9 | 3.3 | 4.3 | 105 | 107.6 |
| C15 | 0.9 | 3.4 | 4.3 | 106 | 107.3 |
| C16 | 0.9 | 3.8 | 4.3 | 107 | 107.3 |
| C17 | 1.5 | 3.0 | 0.7 | 101 | 107.3 |
| C18 | 1.5 | 3.3 | 0.7 | 105 | 107.3 |
| C19 | 1.5 | 3.4 | 0.7 | 107 | 106.9 |
| C20 | 1.5 | 3.8 | 0.7 | 108 | 106.1 |
| C21 | 1.5 | 3.0 | 4.3 | 105 | 106.9 |
| C22 | 1.5 | 3.3 | 4.3 | 107 | 106.5 |
| C23 | 1.5 | 3.4 | 4.3 | 108 | 105.8 |
| C24 | 1.5 | 3.8 | 4.3 | 110 | 105.8 |
| C25 | 2.1 | 3.0 | 0.7 | 111 | 106.5 |
| C26 | 2.1 | 3.3 | 0.7 | 111 | 106.1 |
| C27 | 2.1 | 3.4 | 0.7 | 111 | 105.8 |
| C28 | 2.1 | 3.8 | 0.7 | 114 | 105.4 |
| C29 | 2.1 | 3.0 | 4.3 | 114 | 105.8 |
| C30 | 2.1 | 3.3 | 4.3 | 117 | 105.4 |
| C31 | 2.1 | 3.4 | 4.3 | 119 | 105.0 |
| C32 | 2.1 | 3.8 | 4.3 | 128 | 105.3 |

[Table 4]

| Battery | Negative electrode material | | | Negative current collector | Number of PSOC cycles | Low-temperature high-rate discharge duration time |
|---|---|---|---|---|---|---|
| | Polymer compound/content (% by mass) | | Carbon black content (% by mass) | Density (g/cm³) | Surface roughness Ra (μm) | |
| D1 | PEG/OL | 0.001 | 2.1 | 3.8 | 4.3 | 127 | 100.2 |
| D2 | PEG/OL | 0.003 | 2.1 | 3.8 | 4.3 | 127 | 100.9 |
| D3 | PEG/OL | 0.025 | 2.1 | 3.8 | 4.3 | 126 | 105.3 |
| D4 | PEG/OL | 0.06 | 2.1 | 3.8 | 4.3 | 128 | 101.7 |
| D5 | PEG | 0.025 | 2.1 | 3.8 | 4.3 | 127 | 105.2 |
| D6 | PPG | 0.025 | 2.1 | 3.8 | 4.3 | 126 | 105.3 |
| D7 | PEG/DL | 0.025 | 2.1 | 3.8 | 4.3 | 126 | 105.3 |
| D8 | PEG/DS | 0.025 | 2.1 | 3.8 | 4.3 | 127 | 105.3 |

INDUSTRIAL APPLICABILITY

The lead-acid battery according to one aspect and another aspect of the present invention is suitable for use in an idling stop vehicle as, for example, a lead-acid battery for IS that is charged and discharged under PSOC conditions. The lead-acid battery can be suitably used as, for example, a power source for starting a vehicle (automobiles, motorcycles, etc.), an industrial energy storage apparatus (for example, a power source of an electric vehicle (such as forklift) or the like), and the like. Note that these applications are merely illustrative and not limited to these applications.

DESCRIPTION OF REFERENCE SIGNS

1: lead-acid battery
2: negative electrode plate
3: positive electrode plate
4: separator
5: positive electrode shelf
6: negative electrode shelf
7: positive pole
8: penetrating connection body
9: negative pole
11: element
12: container
13: partition
14: cell chamber
15: lid
16: negative electrode terminal
17: positive electrode terminal
18: vent plug

**Claims**

1. A lead-acid battery comprising:

   a negative electrode plate, a positive electrode plate, and an electrolyte solution, wherein
   the negative electrode plate includes a negative current collector and a negative electrode material, and
   the negative electrode material contains a carbonaceous material,
   a content of the carbonaceous material in the negative electrode material is 0.9% by mass or more, and
   an arithmetic average roughness Ra of a surface of the negative current collector is 1 pm or more and 22 pm or less.

2. The lead-acid battery according to claim 1, wherein the carbonaceous material contains carbon black.

3. The lead-acid battery according to claim 2, wherein a density of the negative electrode material is 3.4 g/cm³ or more.

4. The lead-acid battery according to claim 3, wherein the density of the negative electrode material is 4.1 g/cm$^3$ or less.

5. The lead-acid battery according to any one of claims 1 to 4, wherein the arithmetic average roughness Ra of the surface of the negative current collector is 15 pm or less.

6. The lead-acid battery according to any one of claims 1 to 5, wherein the negative current collector is a punched current collector.

7. The lead-acid battery according to any one of claims 1 to 6, wherein the negative electrode material contains a polymer compound having a peak in a range of 3.2 ppm or more and 3.8 ppm or less in a chemical shift of $^1$H-NMR spectrum measured using deuterated chloroform as a solvent.

8. The lead-acid battery according to claim 7, wherein the polymer compound contains a repeating structure of oxy C$_{2-4}$ alkylene units.

9. The lead-acid battery according to claim 7 or 8, wherein the polymer compound contains at least one selected from the group consisting of a hydroxy compound having a repeating structure of oxy C$_{2-4}$ alkylene units, an etherified product of the hydroxy compound, and an esterified product of the hydroxy compound, and
the hydroxy compound is at least one selected from the group consisting of poly C$_{2-4}$ alkylene glycol, a copolymer containing a repeating structure of oxy C$_{2-4}$ alkylene, and a C$_{2-4}$ alkylene oxide adduct of a polyol.

10. The lead-acid battery according to claim 9, wherein the polymer compound contains at least one selected from the group consisting of polyethylene glycol, polyethylene glycol oleate, polyethylene glycol dilaurate, polyethylene glycol distearate, and polypropylene glycol.

11. The lead-acid battery according to any one of claims 7 to 10, wherein a content of the polymer compound in the negative electrode material is 30 ppm or more and 600 ppm or less on a mass basis.

12. The lead-acid battery according to any one of claims 1 to 11, wherein the content of the carbonaceous material in the negative electrode material is 5% by mass or less.

13. The lead-acid battery according to any one of claims 1 to 12, wherein the content of the carbonaceous material in the negative electrode material is 2.1% by mass or less.

Fig. 1

Fig. 2

## INTERNATIONAL SEARCH REPORT

| International application No. |
| --- |
| **PCT/JP2021/039833** |

**A.  CLASSIFICATION OF SUBJECT MATTER**

*H01M 4/14*(2006.01)i; *H01M 4/62*(2006.01)i; *H01M 4/74*(2006.01)i; *H01M 10/06*(2006.01)i
FI:  H01M4/14 Q; H01M4/62 B; H01M4/74 D; H01M10/06 Z

According to International Patent Classification (IPC) or to both national classification and IPC

**B.  FIELDS SEARCHED**

Minimum documentation searched (classification system followed by classification symbols)

H01M4/14; H01M4/62; H01M4/74; H01M10/06

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
| --- | --- | --- |
| A | JP 2017-162754 A (TORAY INDUSTRIES) 14 September 2017 (2017-09-14) | 1-13 |
| A | JP 2003-242983 A (NIPPON MINING & METALS CO LTD) 29 August 2003 (2003-08-29) | 1-13 |
| A | JP 2004-158433 A (FURUKAWA BATTERY CO LTD) 03 June 2004 (2004-06-03) | 1-13 |

☐ Further documents are listed in the continuation of Box C.      ☑ See patent family annex.

| | |
| --- | --- |
| *    Special categories of cited documents: | "T"  later document published after the international filing date or priority date and not in conflict with the application but cited to understand the principle or theory underlying the invention |
| "A"  document defining the general state of the art which is not considered to be of particular relevance | |
| "E"  earlier application or patent but published on or after the international filing date | "X"  document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"  document member of the same patent family |

| Date of the actual completion of the international search | Date of mailing of the international search report |
| --- | --- |
| **25 November 2021** | **07 December 2021** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2021/039833**

| Patent document cited in search report | | | Publication date (day/month/year) | Patent family member(s) | | | Publication date (day/month/year) |
|---|---|---|---|---|---|---|---|
| JP | 2017-162754 | A | 14 September 2017 | (Family: none) | | | |
| JP | 2003-242983 | A | 29 August 2003 | (Family: none) | | | |
| JP | 2004-158433 | A | 03 June 2004 | US | 2004/0142243 | A1 | |
| | | | | WO | 2003/088385 | A1 | |
| | | | | EP | 1496556 | A1 | |
| | | | | CN | 1533617 | A | |
| | | | | KR | 10-2004-0031777 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001043849 A
- JP 2002042794 A

- JP 2004158433 A